(19) Europäisches Patentamt / European Patent Office / Office européen des brevets

(11) **EP 4 746 330 A1**

(12) **EUROPEAN PATENT APPLICATION**
published in accordance with Art. 153(4) EPC

(43) Date of publication:
**20.05.2026 Bulletin 2026/21**

(21) Application number: **24838687.2**

(22) Date of filing: **04.07.2024**

(51) International Patent Classification (IPC):
***H04L 5/00*** (2006.01)

(52) Cooperative Patent Classification (CPC):
**H04L 1/08; H04L 5/00; H04W 72/232**

(86) International application number:
**PCT/CN2024/103614**

(87) International publication number:
**WO 2025/011434 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.07.2023 CN 202310843379**

(71) Applicant: **Vivo Mobile Communication Co., Ltd.
Dongguan, Guangdong 523863 (CN)**

(72) Inventors:
• **WANG, Yong**
 **Dongguan, Guangdong 523863 (CN)**
• **LIN, Zhipeng**
 **Dongguan, Guangdong 523863 (CN)**
• **JIANG, Wei**
 **Dongguan, Guangdong 523863 (CN)**

(74) Representative: **Murgitroyd & Company
165-169 Scotland Street
Glasgow G5 8PL (GB)**

(54) **INDICATION METHOD AND APPARATUS FOR COMMON PDSCH REPEATED TRANSMISSION, AND TERMINAL**

(57) This application discloses a common PDSCH repetition transmission indication method and apparatus (40), and a terminal (7000), and pertains to the field of communication technologies. The method includes: determining (202), by a terminal (11), a number of repetition transmissions for first downlink transmission based on first indication information, where the first indication information is used to indicate at least one number of repetition transmissions, and the first downlink transmission is common PDSCH repetition transmission.

A terminal obtains first indication information — 201

The terminal determines a number of repetition transmissions for first downlink transmission based on the first indication information — 202

FIG. 2

## Description

## CROSS-REFERENCE TO RELATED APPLICATION

This application claims priority to Chinese Patent Application No. 202310843379.1, filed in China on July 10, 2023, which is incorporated herein by reference in its entirety.

## TECHNICAL FIELD

This application pertains to the field of communication technologies, and specifically relates to a common PDSCH repetition transmission indication method and apparatus, and a terminal.

## BACKGROUND

In a terrestrial network scenario, because a transmit power of a base station is far greater than a transmit power of a terminal, link quality of a downlink channel is usually higher than link quality of an uplink channel. However, in some application scenarios, for example, in a case of a high frequency, the transmit power of the base station is close to a transmit power of a mobile phone. In this case, the link quality of the downlink channel is not necessarily higher than that of the uplink channel.

In a non-terrestrial communication network scenario, first, for example, for satellite communication, a downlink transmit power depends on a quantity of beams supported by a satellite at the same time. As the quantity of beams increases, a transmit power corresponding to each beam decreases. Second, when a frequency band used for non-terrestrial communication overlaps a frequency band used for terrestrial communication in a covered land area, to reduce interference to a terrestrial network, a downlink transmit power of non-terrestrial communication needs to be reduced to a specific extent, to meet a power flux density (Power Flux Density, PFD) requirement. In both cases, the downlink transmit power decreases, which may reduce downlink channel quality.

Therefore, in both the terrestrial network scenario and the non-terrestrial communication network scenario described above, reduction of the channel quality of the downlink channel causes insufficient network coverage. To improve overall network coverage, some downlink channels may be enhanced. For example, the base station may repeatedly transmit the downlink channel to obtain a coverage gain to enhance the downlink channel. However, currently, for a common physical downlink shared channel (Physical Downlink Shared Channel, PDSCH), such as a downlink channel used to carry a random access response, repetition transmission is temporarily not supported. Consequently, transmission of the downlink channel cannot meet a link budget requirement in a link budget.

Therefore, how to enhance a common PDSCH to improve a coverage capability of a network is a problem to be urgently resolved.

## SUMMARY

Embodiments of this application provide a common PDSCH repetition transmission indication method and apparatus, and a terminal, to resolve a problem about how to enhance a common PDSCH to improve a coverage capability of a network.

According to a first aspect, a common PDSCH repetition transmission indication method is provided, where the method includes: determining, by a terminal, a number of repetition transmissions for first downlink transmission based on first indication information, where the first indication information is used to indicate at least one number of repetition transmissions, and the first downlink transmission is common PDSCH repetition transmission.

According to a second aspect, a common PDSCH repetition transmission indication apparatus is provided, where the common PDSCH repetition transmission indication apparatus includes a determining module. The determining module is configured to determine a number of repetition transmissions for first downlink transmission based on first indication information, where the first indication information is used to indicate at least one number of repetition transmissions, and the first downlink transmission is common PDSCH repetition transmission.

According to a third aspect, a terminal is provided, where the terminal includes a processor and a memory, the memory stores a program or instructions executable on the processor, and when the program or the instructions are executed by the processor, the steps of the method according to the first aspect are implemented.

According to a fourth aspect, a terminal is provided, including a processor and a communication interface, where the processor is configured to determine a number of repetition transmissions for first downlink transmission based on first indication information, where the first indication information is used to indicate at least one number of repetition transmissions, and the first downlink transmission is common PDSCH repetition transmission.

According to a fifth aspect, a readable storage medium is provided, where the readable storage medium stores a program or instructions, and when the program or the instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the method according to the first aspect.

According to a seventh aspect, a computer program/program product is provided, where the computer program/program product is stored in a storage medium, and the computer program/program product is executed by at least one processor to implement the steps of the common PDSCH repetition transmission indication method according to the first aspect.

In the embodiments of this application, the terminal may determine, based on the at least one number of repetition transmissions indicated by the first indication information, the number of repetition transmissions for the common PDSCH repetition transmission. To be specific, repetition transmission of the common PDSCH is supported based on the indication of the number of repetition transmissions by the first indication information, so that transmission of a downlink channel meets a link budget requirement in a link budget, thereby improving reliability of common PDSCH transmission, and improving a coverage capability of a network.

BRIEF DESCRIPTION OF DRAWINGS

FIG. 1 is a schematic diagram of an architecture of a wireless communication system according to an embodiment of this application;
FIG. 2 is a flowchart 1 of a common PDSCH repetition transmission indication method according to an embodiment of this application;
FIG. 3 is a flowchart 2 of a common PDSCH repetition transmission indication method according to an embodiment of this application;
FIG. 4 is a flowchart 3 of a common PDSCH repetition transmission indication method according to an embodiment of this application;
FIG. 5 is a schematic diagram of a structure of a common PDSCH repetition transmission indication apparatus according to an embodiment of this application;
FIG. 6 is a schematic diagram of a hardware structure of a communication device according to an embodiment of this application; and
FIG. 7 is a schematic diagram of a hardware structure of a terminal according to an embodiment of this application.

DESCRIPTION OF EMBODIMENTS

The following clearly describes technical solutions in embodiments of this application with reference to accompanying drawings in embodiments of this application. Clearly, the described embodiments are merely some rather than all of embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The terms "at least one (item)", "at least one of", and the like in this application refer to any one, any two, or a combination of any two or more of included objects. For example, at least one (item) of a, b, and c may represent: "a", "b", "c", "a and b", "a and c", "b and c", and "a, b, and c", where a, b, and c may be singular or plural. Similarly, "at least two (items)" means two or more, and a meaning thereof is similar to that of "at least one (item)".

The term "indication" in this application may be either a direct indication (or an explicit indication) or an indirect indication (or an implicit indication). The direct indication may be understood as follows: A sender explicitly notifies, in a sent indication, a receiver of specific information, an operation that needs to be performed, a requested result, or other content. The indirect indication may be understood as follows: The receiver determines corresponding information based on the indication sent by the sender, or performs determining based on the indication sent by the sender, and determines, based on a determining result, the operation that needs to be performed or the requested result.

It should be noted that, a technology described in embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

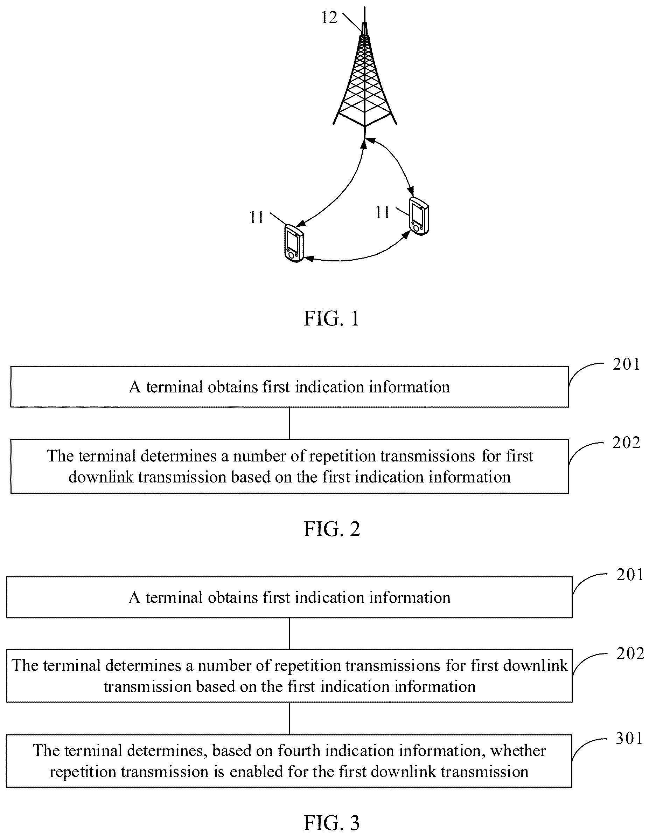

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that a same technical effect is achieved. It should be noted that in the embodiments of this application, only a base station in an NR system is used as an example for description, and a specific type of the base station is not limited.

The following explains and describes some concepts and/or terms used in the common PDSCH repetition transmission indication method and apparatus, and the terminal provided in the embodiments of this application.

1. Random access procedure and Msg2/MsgB/Msg4

The random access procedure may be a contention-based random access procedure, or may be a contention-free random access procedure. The random access procedure may be a four-step random access procedure (also referred to as a Type-1 random access procedure) or a two-step random access procedure (also referred to as a Type-2 random access procedure).

In the contention-based four-step random access procedure, a terminal first sends an Msg1 including a preamble (preamble) to a network. After detecting the preamble, the network sends an Msg2/RAR (random access response) message, including a number of the preamble detected by the network and an uplink radio resource allocated to the terminal to send an Msg3. After receiving the Msg2, the terminal confirms that at least one of the numbers of the preamble carried in the Msg2 is consistent with a number of the preamble sent by the terminal, and sends, based on a resource indicated by the random access response (Random Access Response, RAR), the Msg3 that includes contention resolution information. After receiving the Msg3, the network sends an Msg4 that includes contention resolution information. After receiving the Msg4, the terminal confirms that the contention resolution information is consistent with that sent by the terminal in the Msg3, that is, completes 4-step random access.

The network includes uplink grant (UL grant) information in the RAR to indicate Msg3 PUSCH scheduling information, and includes information such as a random access channel preamble identifier (Random Access channel Preamble ID, RAPID), a temporary cell radio network temporary identifier (Temporary Cell Radio Network Temporary Identifier, RNTI, TC-RNTI), and a timing advance (Timing Advance, TA). If the network does not receive the Msg3 physical uplink shared channel (Physical Uplink Shared Channel, PUSCH), Msg3 PUSCH repetition transmission may be scheduled in a physical downlink control channel (Physical Downlink Control Channel, PDCCH) scrambled by the TC-RNTI.

For the contention-based random access procedure, different terminals randomly select preambles for transmission. In this case, different terminals may select a same preamble for sending on a same time-frequency radio resource (random access occasion (RACH Occasion, RO) resource). This case may be understood as a preamble conflict for the terminals. In this case, different terminals receive a same RAR, and in this case, different terminals transmit the Msg3 PUSCH based on scheduling information in the RAR UL grant. Regardless of whether the Msg3 PUSCH is scheduled as repetition transmission (Msg3 repetition transmission is introduced in the NR Rel-17), the network can obtain, through parsing on the same Msg3 PUSCH scheduling resource, only a PUSCH (including contention resolution information) sent by one terminal. Therefore, the network includes, in the Msg4, the contention resolution information received in the Msg3. If the contention resolution information in the Msg4 received by the terminal matches the contention resolution information sent by the terminal in the Msg3 PUSCH, the terminal considers that the contention resolution succeeds. If the contention resolution information in the Msg4 received by the terminal does not match the contention resolution information sent by the terminal in the Msg3 PUSCH, the terminal considers that the contention resolution fails.

If the contention resolution fails, the terminal reselects the RACH sending resource to send the PRACH, and performs a next random access attempt.

In the NR Rel-16, the two-step random access procedure 2-step RACH is introduced. The first step is that the terminal sends an MsgA to a network side. After receiving the MsgA, the network side sends an MsgB message to the terminal. If the terminal does not receive the MsgB within a specific time, the terminal adds one to a counter for counting the number of times the MsgA is sent, and resends the MsgA. If the counter for counting the number of times the MsgA is sent reaches a specific threshold, the terminal switches from the 2-step random access procedure to the 4-step random access procedure. The MsgB received by the terminal may be a success random access response (success RAR). In this case, the 2-step RACH ends. The MsgB received by the terminal may alternatively be a fallback random access response (fallback RAR). In this case, the terminal falls back to the 4-step RACH procedure. The MsgA includes an MsgA preamble part and an MsgA PUSCH part. The preamble part is sent on an RO used for the 2-step RACH, and the PUSCH part is sent on an MsgA PUSCH resource associated with the sending of the MsgA preamble and the RO. The MsgA PUSCH resource is a group of PUSCH resources configured with respect to each physical random access channel (Physical Random Access Channel, PRACH) timeslot, including a time-frequency resource and a demodulation reference signal (Demodulation Reference Signal, DMRS) resource.

2. Determining of Msg2/MsgB/Msg4 PDSCH transmission resources

Msg2 PDSCH is downlink transmission for downlink control information (Downlink Control Information, DCI) scheduling with CRC scrambled by a random access (Random Access, RA)-RNTI.

MsgB PDSCH is downlink transmission for DCI scheduling with cyclic redundancy check (Cyclic Redundancy Check, CRC) scrambled by an MsgB-RNTI.

Msg4 PDSCH is downlink transmission for DCI scheduling with CRC scrambled by a TC-RNTI.

(1) Time domain resource allocation (Time Domain Resource Allocation, TDRA):

Table 1

| RNTI | PDCCH search space | SS/PBCH block and CORESET multiplexing pattern | PDSCH-ConfigCommon includes PDSCH-Time Domain Allocation List | PDSCH time domain resource allocation to apply |
|---|---|---|---|---|
| RA-RNTI, MSGB-RNTI, TC-RNTI | Type1 common | 1,2,3 | No | Default A |
| | | 1,2,3 | Yes | PDSCH-Time Domain Allocation List provided in PDSCH-ConfigCommon |

Meanings of the foregoing Table 1 indicate that for the Msg2/MsgB/Msg4 PDSCH, if PDSCH-TimeDomainAllocationList (a time domain allocation table) is configured in a higher-layer parameter PDSCH-ConfigCommon, the time domain resource allocation of the Msg2/MsgB/Msg4 PDSCH is given by the PDSCH-Time Domain Allocation List.

Otherwise, the time domain resource allocation is given by a default (Default) A. The default A is a PDSCH TDRA default table A (which may be referred to as a TDRA table A) that is given separately for cases of a normal cyclic prefix (Normal Cyclic Prefix, NCP) and an extended cyclic prefix (Extended CP, ECP), which is respectively the following Table 2 and Table 3.

**Table 2: Default PDSCH time domain resource allocation A for normal CP**

| Row index | Dmrs-TypeA Position | PDSCH mapping type | $K_0$ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

**Table 3: Default PDSCH time domain resource allocation A for extended CP**

| Row index | Dmrs-TypeA Position | PDSCH mapping type | $K_0$ | S | L |
|---|---|---|---|---|---|
| 1 | 2 | Type A | 0 | 2 | 6 |
| | 3 | Type A | 0 | 3 | 5 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |

(continued)

| Row index | Dmrs-TypeA Position | PDSCH mapping type | $K_0$ | S | L |
|---|---|---|---|---|---|
| 6 | 2 | Type B | 0 | 6 | 4 |
| | 3 | Type B | 0 | 8 | 2 |
| 7 | 2 | Type B | 0 | 4 | 4 |
| | 3 | Type B | 0 | 6 | 4 |
| 8 | 2,3 | Type B | 0 | 5 | 6 |
| 9 | 2,3 | Type B | 0 | 5 | 2 |
| 10 | 2,3 | Type B | 0 | 9 | 2 |
| 11 | 2,3 | Type B | 0 | 10 | 2 |
| 12 | 2,3 | Type A | 0 | 1 | 11 |
| 13 | 2,3 | Type A | 0 | 1 | 6 |
| 14 | 2,3 | Type A | 0 | 2 | 4 |
| 15 | 2,3 | Type B | 0 | 4 | 6 |
| 16 | 2,3 | Type B | 0 | 8 | 4 |

It can be seen from the foregoing information in Table 2 and Table 3 that a group of $K_0$, S, and L may be determined by a row index (row index, scheduled DCI indication), a DMRS-TypeA-Position, and a PDSCH mapping type (mapping type). $K_0$ represents a timeslot offset between the scheduled DCI and a corresponding PDSCH, S represents a start symbol of a time domain resource for transmitting the corresponding PDSCH, and L represents a quantity of symbols occupied by the time domain resource for transmitting the corresponding PDSCH.

(2) Frequency domain resource allocation (Frequency Domain Resource Allocation)

In the NR protocol, two frequency domain resource allocation methods are defined for the PDSCH channel, namely, type 0 and type 1. When the terminal assumes that the scheduling information is carried by using a DCI format 1_0/4_0/4_1, the type 1 frequency domain resource allocation method is used.

For a PDSCH scheduled by using a PDCCH on any type of common search space, regardless of which bandwidth part (Bandwidth Part, BWP) is an active (active) BWP, a resource block (Resource Block, RB) number starts from a lowest RB index on bandwidth of a control resource set (Control Resource Set, CORESET) that receives DCI. Otherwise, the RB number starts from a lowest RB index of a determined downlink BWP.

Downlink frequency domain resource type 1: The resource block assignment information indicates a set of interleaved or non-interleaved virtual resource blocks (Virtual Resource Block, VRB) that are consecutively allocated to the terminal on the initial bandwidth. However, for a decoded DCI format 1_0 in any type of common search space, if a cell is configured with CORESET 0, the initial bandwidth is bandwidth of CORESET 0. If the cell is not configured with CORESET 0, the initial bandwidth is bandwidth corresponding to an initial downlink BWP.

An indication field of the downlink frequency domain resource type 1 mainly includes a resource indication value (Resource Indication Value, RIV), which corresponds to one start VRB index RBstart and consecutively allocated LRBs having a quantity of RBs. The RIV is determined by the following formula:

$$\text{If } (L_{RBs} - 1) \leq \lfloor N_{BWP}^{size}/2 \rfloor \text{ then}$$

$$RIV = N_{BWP}^{size}(L_{RBs} - 1) + RB_{start}$$

$$\text{else}$$

$$RIV = N_{BWP}^{size}(N_{BWP}^{size} - L_{RBs} + 1) + (N_{BWP}^{size} - 1 - RB_{start})$$

$$L_{RBs} \geq 1, \text{ and does not exceed } N_{BWP}^{size} - RB_{start}.$$

3. Determining of Msg2/MsgB/Msg4 PDSCH transmission parameters

(1) Physical resource block (Physical Resource Block, PRB) binding

The terminal assumes that a precoding granularity $P'_{BWP,i}$ in frequency domain is consecutive RBs, and $P'_{BWP,i}$ may be equal to a value in {2, 4, wideband}.

If $P'_{BWP,i}$ is determined to be "wideband", the terminal does not expect to be scheduled to perform PDSCH transmission on non-consecutive PRBs, and the terminal may assume that resources in a same transmission configuration indication (Transmission Configuration Indication, TCL) state or under a same quasi-co-location (Quasi-Co-Location, QCL) assumption use the same precoding.

If $P'_{BWP,i}$ is determined to be a value in {2, 4}, BWP i classifies $P'_{BWP,i}$ consecutive PRBs into precoding resource block groups (Precoding Resource Block Group, PRG), and each PRG may actually include one or more consecutive PRBs.

Similarly, the terminal may assume that the same precoding is used on any consecutive PRBs in a same PRG.

Further, a size of the first PRG is $P'_{BWP,i} - N^{start}_{BWP,i} \bmod P'_{BWP,i}$, and a size of the last PRG is:

if

$$(N^{start}_{BWP,i} + N^{size}_{BWP,i}) \bmod P'_{BWP,i} \neq 0, \quad (N^{start}_{BWP,i} + N^{size}_{BWP,i}) \bmod P'_{BWP,i} ;$$

if

$$(N^{start}_{BWP,i} + N^{size}_{BWP,i}) \bmod P'_{BWP,i} = 0, \quad P'_{BWP,i}.$$

If the terminal is scheduled to perform PDSCH transmission by using the DCI format 1_0/4_0, the terminal assumes that $P'_{BWP,i}$ is 2 PRBs.

(2) Modulation order:

For a PDSCH (msg2 PDSCH) with DCI scheduling scrambled by the RA-RNTI, the terminal does not expect a modulation order Qm of the PDSCH to be greater than 2.

For the MsgB/Msg4 PDSCH, a protocol does not specifically specify a modulation order of the MsgB/Msg4 PDSCH. A conventional procedure is used to determine a modulation and coding scheme (Modulation And Coding Scheme, MCS) level through indication of a related parameter, to obtain a modulation order of the MsgB/Msg4 PDSCH.

(3) Determining of a PDSCH transport block size (Transport Block Size, TBS):

A TBS calculation process is as follows:

Step 1: Calculate a quantity of available resource elements (Resource Element, RE) in one timeslot.

1) Calculate a quantity of available REs in one PRB: $N'_{RE} = N^{RB}_{sc} \cdot N^{sh}_{symb} - N^{PRB}_{DMRS} - N^{PRB}_{oh}$, where $N^{RB}_{sc} = 12$ indicates that one PRB in frequency domain includes 12 subcarriers; $N^{sh}_{symb}$ is a quantity of PDSCH symbols scheduled in this timeslot; $N^{PRB}_{DMRS}$ is a quantity of REs used for DMRS in symbols scheduled in one PRB in frequency domain and in time domain; and $N^{PRB}_{oh}$ is configured by an xOverhead field in a higher-layer parameter PUSCH-ServingCellConfig. A channel state information-reference signal (Channel State Information-Reference Signal, CSI-RS), overheads of the CORESET, and the like are considered. A default value is 0, and configurable values are {6, 12, 18}. For PDSCH (msg2/msgB PDSCH) transmission with DCI scheduling scrambled by the RA-RNTI or MsgB-RNTI, $N^{PRB}_{oh}$ is set to 0.

Calculate a total quantity of available REs for PDSCH transmission: $N_{RE} = \min\left(156, N'_{RE}\right) \cdot n_{PRB}$ , where $n_{PRB}$ is a total quantity of PRBs allocated to the terminal.

Step 2: Calculate a quantity of bits of intermediate information: $N_{info} = N_{RE} \cdot R \cdot Q_m \cdot \upsilon$ (the MCS level is used to determine a corresponding modulation order $Q_m$ and a corresponding target bit rate R, and $\upsilon$ is a quantity of transmission layers).

When $N_{info} \leq 3824$, step 3 is performed.

Otherwise, step 4 is performed.

Step 3: When $N_{info} \leq 3824$,

Quantize the quantity of bits of the intermediate information: $N'_{info} = max\left(24, 2^n \cdot \left\lfloor \frac{N_{info}}{2^n} \right\rfloor\right)$ , where

$$n = max\left(3, \lfloor log_2\left(N_{info}\right)\rfloor - 6\right).$$

The nearest TBS not less than $N'_{info}$ is found in Table 4 below.

**Table 4: TBS for $N_{info} \leq 3824$**

| Index | TBS | Index | TBS | Index | TBS | Index | TBS |
|---|---|---|---|---|---|---|---|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |

(continued)

| Index | TBS | Index | TBS | Index | TBS | Index | TBS |
|---|---|---|---|---|---|---|---|
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

Step 4: When $N_{info} > 3824$,

Quantize an intermediate number $N'_{info} = max\left(3840, 2^n \times round\left(\frac{N_{info}-24}{2^n}\right)\right)$, where

$$n = \lfloor log_2(N_{info} - 24)\rfloor - 5.$$

If the target bit rate R ≤ 1/4,

$$TBS = 8 \cdot C \cdot \left\lceil\frac{N'_{info}+24}{8\cdot C}\right\rceil - 24,$$

where $C = \left\lceil\frac{N'_{info}+24}{3816}\right\rceil$

Otherwise, when (R > 1/4),

If

$$N'_{info} > 8424, \quad TBS = 8 \cdot C \cdot \left\lceil\frac{N'_{info}+24}{8\cdot C}\right\rceil - 24,$$

where $C = \left\lceil\frac{N'_{info}+24}{8424}\right\rceil$;

Otherwise,

$$TBS = 8 \cdot \left\lceil\frac{N'_{info}+24}{8}\right\rceil - 24.$$

For a PDSCH (msg4 PDSCH) with DCI format 1_0 scheduling scrambled by the TC-RNTI, a TBS determining process of the PDSCH is consistent with the foregoing TBS determining procedure.

For the PDSCH (msg2/msgB PDSCH) with DCI format 1_0 scheduling scrambled by the RA-RNTI and the MsgB-RNTI, a TBS determining process of the PDSCH is basically consistent with the foregoing TBS determining procedure, except that step 2 is modified as follows: A scaling factor S is introduced, and the calculation of the quantity of bits of the intermediate information may be scaled: $N_{info} = S \cdot N_{RE} \cdot R \cdot Q_m \cdot \upsilon$, where a supported factor is indicated by a transport block (Transport Block, TB) scaling (scaling) field in the DCI, and a correspondence therebetween is shown in Table 5 below, that is, $N_{info}$ scaling factors of the paging RNTI (Paging RNTI, P-RNTI), the RA-RNTI, and the MsgB-RNTI.

**Table 5**

| TB scaling field | Scaling factor S |
|---|---|
| 00 | 1 |
| 01 | 0.5 |
| 10 | 0.25 |
| 11 | |

With reference to the accompanying drawings, the following describes in detail the common PDSCH repetition transmission indication method provided in the embodiments of this application by using some embodiments and application scenarios thereof.

The embodiments of this application may be applied to a non-terrestrial network (Non-Terrestrial Network, NTN) or terrestrial network (Terrestrial Network, TN) scenario to enhance an Msg2/MsgB/Msg4 PDSCH, and may be applicable to all downlink channels before a terminal enters a connected state, for example, a paging (paging) PDSCH.

An embodiment of this application provides a common PDSCH repetition transmission indication method. The terminal may determine, based on at least one number of repetition transmissions indicated by first indication information, a number of repetition transmissions for common PDSCH repetition transmission. To be specific, repetition transmission of a common PDSCH is supported based on an indication of a number of repetition transmissions by the first indication information, so that transmission of a downlink channel meets a link budget requirement in a link budget, thereby improving reliability of common PDSCH transmission, and improving a coverage capability of a network.

The common PDSCH repetition transmission indication method provided in some embodiments of this application may be performed by a terminal, a functional module or entity in the terminal, or a common PDSCH repetition transmission indication apparatus. The following describes the technical solutions provided in some embodiments of this application by using an example in which the terminal performs the common PDSCH repetition transmission indication method.

An embodiment of this application provides a common PDSCH repetition transmission indication method. FIG. 2 is a flowchart of a common PDSCH repetition transmission indication method according to an embodiment of this application. As shown in FIG. 2, the common PDSCH repetition transmission indication method provided in this embodiment of this application may include the following step 201 and step 202.

Step 201: A terminal obtains first indication information.

Optionally, in this embodiment of this application, the foregoing first indication information may be semi-statically configured, may be dynamically indicated, or may be specified in a protocol.

Step 202: The terminal determines a number of repetition transmissions for first downlink transmission based on the first indication information.

In this embodiment of this application, the first indication information is used to indicate at least one number of repetition transmissions, and the first downlink transmission is common PDSCH repetition transmission.

It should be noted that the common PDSCH (common PDSCH) repetition transmission described in this application may include one or more types of PDSCH repetition transmission that the terminal needs to receive before entering the connected state, for example, one or more types of PDSCH repetition transmission among an Msg2 PDSCH, an MsgB PDSCH, and an Msg4 PDSCH. The common PDSCH repetition transmission may also be referred to as retransmission of the common PDSCH, that is, this application supports retransmission of the common PDSCH.

The MsgB PDSCH described in this application includes a success random access response (success RAR), and further includes a fallback random access response (fallback RAR).

The RAR described in this application may be a RAR message in an Msg2 in a four-step random access channel (4-step RACH), or may be a success RAR or a fallback RAR in a two-step random access channel (2-step RACH).

The Msg2/MsgB/Msg4 PDSCH repetition described in this application may mean that any one or more of the three types of channels support repetition transmission, which may also be referred to as Msg2/MsgB/Msg4 PDSCH repetition, or may be briefly referred to as Msg2/MsgB/Msg4 repetition.

It may be understood that the foregoing first indication information indicates one number of repetition transmissions or one set of numbers of repetition transmissions. Optionally, the foregoing first indication information may directly indicate one number of repetition transmissions. Alternatively, the first indication information indicates one number of repetition transmissions in an existing set of numbers of repetition transmissions, and the existing set of numbers of repetition transmissions is indicated in advance by other indication information or agreed on in a protocol.

Optionally, in this embodiment of this application, in a case that the first indication information indicates one number of repetition transmissions, the first indication information is semi-statically configured or dynamically indicated.

Optionally, in this embodiment of this application, in the case that the first indication information indicates one number of repetition transmissions, the one number of repetition transmissions is the number of repetition transmissions for the first downlink transmission.

Optionally, in this embodiment of this application, in a case that the first indication information indicates a set of numbers of repetition transmissions, the first indication information is semi-statically configured or specified in a protocol, and the set of numbers of repetition transmissions includes at least two numbers of repetition transmissions.

Optionally, in this embodiment of this application, in the case that the first indication information indicates a set of numbers of repetition transmissions, the number of repetition transmissions for the first downlink transmission is determined by second indication information, where the second indication information is used to indicate one number of repetition transmissions in the set of numbers of repetition transmissions, and the one number of repetition transmissions is the number of repetition transmissions for the first downlink transmission.

It may be understood that, when the first indication information indicates a set of numbers of repetition transmissions, regardless of whether the set of numbers of repetition transmissions is semi-statically configured or specified in a protocol, the second indication information may be used to further indicate one number of repetition transmissions in the set of numbers of repetition transmissions in the first indication information, where the one number of repetition transmissions is the number of repetition transmissions for the first downlink transmission.

Optionally, in this embodiment of this application, the foregoing second indication information is semi-statically configured or dynamically indicated.

In a manner, in a case that the foregoing set of numbers of repetition transmissions is semi-statically configured, the second indication information may be dynamically indicated.

In another manner, in a case that the set of numbers of repetition transmissions is specified in a protocol, the second indication information may be semi-statically configured.

It should be noted that, in this embodiment of this application, the semi-static configuration or dynamic indication is configured or delivered by a network-side device. For example, the foregoing first indication information is semi-statically configured or dynamically indicated by the network-side device, and the foregoing second indication information is semi-statically configured or dynamically indicated by the network-side device.

Optionally, in this embodiment of this application, scheduling DCI corresponding to the common PDSCH repetition transmission includes third indication information, and the third indication information is used to enable or disable the number of repetition transmissions that is semi-statically configured or dynamically indicated.

In other words, after one number of repetition transmissions is semi-statically configured or dynamically indicated, the repetition transmission may be used or not used based on the scheduling DCI corresponding to the common PDSCH repetition transmission. If the repetition transmission is used, common PDSCH repetition transmission is performed. If the repetition transmission is not used, common PDSCH repetition transmission is not performed.

It should be noted that, the scheduling DCI corresponding to the common PDSCH repetition transmission described in this embodiment of this application may be understood as DCI for scheduling the common PDSCH repetition transmission. For example, for the Msg2 PDSCH, the DCI corresponding to the Msg2 PDSCH is DCI for scheduling the Msg2 PDSCH.

Optionally, in this embodiment of this application, the foregoing semi-static indication may be indicated by system information (System Information, SI) or a radio resource control (Radio Resource Control, RRC) message. The system information includes at least one of a master information block (Master Information Block, MIB) and a system information block (System Information Block, SIB).

It should be noted that, the semi-static indication described in this embodiment of this application is applicable to both the first indication information and the second indication information. To be specific, at least one of the foregoing first indication information and the foregoing second indication information is indicated by the system information or the RRC message.

Optionally, in this embodiment of this application, a specific manner in which the foregoing semi-static indication is indicated by the RRC message includes any one of the following:

(1) A new RRC parameter is introduced into the PDSCH-ConfigCommon, which is specially used to indicate a number of repetition transmissions for the common PDSCH repetition transmission.

(2) When the parameter PDSCH-TimeDomainAllocationList (PDSCH time domain allocation table) in the PDSCH-ConfigCommon indicates time domain resource allocation, an indication of the number of repetition transmissions for the common PDSCH repetition transmission is added.

Optionally, in this embodiment of this application, the dynamic indication is indicated by the common PDSCH repetition transmission; or the dynamic indication is indicated by the scheduling DCI corresponding to the common PDSCH repetition transmission.

It should be noted that, the dynamic indication described in this embodiment of this application is applicable to both the first indication information and the second indication information. To be specific, at least one of the foregoing first indication information and the foregoing second indication information is indicated by the common PDSCH repetition transmission, or is indicated by the scheduling DCI corresponding to the common PDSCH repetition transmission.

Optionally, in this embodiment of this application, the dynamic indication is indicated by a scrambling sequence of the common PDSCH repetition transmission.

Optionally, in this embodiment of this application, in a case that the dynamic indication is indicated by the scrambling sequence of the common PDSCH repetition transmission, the common PDSCH repetition transmission is scrambled by a first identifier, and the first identifier corresponds to one repetition factor or one index in the set of numbers of repetition transmissions, to determine the one number of repetition transmissions.

It may be understood that, for common PDSCH repetition transmission with repetition transmission scrambled by different identifiers (IDs), the different IDs may correspond to different repetition factors (repetition factor) or indexes in the set of numbers of repetition transmissions to determine the foregoing one number of repetition transmissions, which is the number of repetition transmissions for the foregoing first downlink transmission.

Optionally, in this embodiment of this application, in a case that the dynamic indication is indicated by the scrambling sequence of the common PDSCH repetition transmission, a DMRS sequence of the common PDSCH repetition transmission or an identifier that generates a sequence initial value corresponds to one repetition factor or one index in the set of numbers of repetition transmissions, to determine the one number of repetition transmissions.

It may be understood that, based on different sequences or different IDs that generate sequence initial values of the DMRS for repetition transmission of the common PDSCH, the different sequences or different IDs may correspond to different repetition factors or different indexes in the set of numbers of repetition transmissions to determine the foregoing one number of repetition transmissions, which is the number of repetition transmissions for the foregoing first downlink transmission.

Optionally, in this embodiment of this application, the dynamic indication is indicated by any one of the following:

indicated by an RNTI that scrambles the scheduling DCI;
indicated by a DMRS sequence of a PDCCH on which the scheduling DCI is located; and
indicated by a field in the scheduling DCI.

Optionally, in this embodiment of this application, in a case that the dynamic indication is indicated by the RNTI that scrambles the scheduling DCI, the scheduling DCI is scrambled by a first RNTI, and the first RNTI corresponds to one repetition factor or one index in the set of numbers of repetition transmissions, to determine the one number of repetition transmissions.

It may be understood that, different RNTIs are used to scramble the DCI for scheduling the common PDSCH repetition transmission, and the different RNTIs may correspond to different repetition factors or different indexes in the set of numbers of repetition transmissions to determine the foregoing one number of repetition transmissions, which is the number of repetition transmissions for the foregoing first downlink transmission.

Optionally, in this embodiment of this application, the scheduling DCI scrambled by the first RNTI includes any one of the following:

a first DCI format with CRC scrambled by a TC-RNTI (DCI format 1_0 with CRC scrambled by TC-RNTI);
a first DCI format with CRC scrambled by an RA-RNTI (DCI format 1_0 with CRC scrambled by RA-RNTI); and
a first DCI format with CRC scrambled by an MsgB-RNTI (DCI format 1_0 with CRC scrambled by MsgB-RNTI).

Optionally, in this embodiment of this application, in a case that the dynamic indication is indicated by the field in the scheduling DCI, the scheduling DCI indicates, by using a first indication field, one repetition factor or one index in the set of numbers of repetition transmissions, to determine the one number of repetition transmissions, where the first indication field is an existing field or a newly added indication field in the scheduling DCI.

For example, the field in the scheduling DCI is used to further indicate to select one number of repetition transmissions in the foregoing set of numbers of repetition transmissions, which is the number of repetition transmissions for the foregoing first downlink transmission. Alternatively, a TDRA field in the scheduling DCI is used to indicate a specific option of the PDSCH-TimeDomainAllocationList, and a repetition factor under this option is used as the number of repetition transmissions for the foregoing first downlink transmission. In some embodiments, a PDSCH TDRA table (also referred to as a TDRA list) supporting common PDSCH repetition transmission is specially configured by using system information. For example, one repetition factor is defined for each option of the configured TDRA list.

It may be understood that, an indication field is added to the DCI for scheduling the common PDSCH repetition transmission, to indicate different repetition factors or different indexes in the set of numbers of repetition transmissions to determine the foregoing one number of repetition transmissions, which is the number of repetition transmissions for the foregoing first downlink transmission. Alternatively, a first field (an existing field) in the DCI for scheduling the common PDSCH repetition transmission is redefined to correspond to different repetition factors or different indexes in the set of numbers of repetition transmissions to determine the foregoing one number of repetition transmissions, which is the number of repetition transmissions for the foregoing first downlink transmission.

Optionally, in this embodiment of this application, in a case that the first indication field is an existing field in the scheduling DCI,

(1) for the scheduling DCI corresponding to a downlink data channel used to carry the Msg2 or the MsgB, the foregoing first indication field includes at least one of the following: a modulation and coding scheme (Modulation and coding scheme) field, a TB scaling (TB scaling) field, and a reserved bits (Reserved bits) field; and

(2) for the scheduling DCI corresponding to a downlink data channel used to carry the Msg4, the foregoing first indication field includes at least one of the following: a modulation and coding scheme field, a new data indicator (New data indicator) field, a redundancy version (Redundancy version) field, a downlink assignment index (Downlink assignment index) field, a field of an indicator of timing between a downlink data channel and a hybrid automatic repeat request (Hybrid Automatic Repeat reQuest, HARQ) (PDSCH-to-HARQ_feedback timing indicator), and a reserved bits field.

It should be noted that, the first indication field herein including at least one of the following means that indication may be performed by using some or all bits of one field in these fields, or joint indication may be performed by using some or all bits of different fields.

Optionally, in this embodiment of this application, in a case that the first indication information is specified in the protocol, the first indication information directly indicates the set of numbers of repetition transmissions specified in the protocol; or the first indication information is indication information of a number of repetition transmissions in a PDSCH time domain resource allocation table, and the indication information of the number of repetition transmissions is used to indicate the set of numbers of repetition transmissions. In this way, the set of numbers of repetition transmissions is specified in the protocol, without increasing additional signaling overheads.

Optionally, in this embodiment of this application, the set of numbers of repetition transmissions indicated by the indication information of the number of repetition transmissions is indicated by modifying a default PDSCH time domain resource allocation table.

It should be noted that, for the foregoing default PDSCH time domain resource allocation table, reference may be made to Table 2 and Table 3 in the foregoing embodiment.

Optionally, in this embodiment of this application, the foregoing manner of modifying the default PDSCH time domain resource allocation table may include at least one of the following:

(1) An information column is added to indicate a number of repetition transmissions.
(2) The table is extended, that is, some row indexes (row index) are added to a lower part of the default PDSCH time domain resource allocation table. In this case, 1 bit or a plurality of bits need to be added to indicate a new row index.
(3) Some row indexes are deleted, and a supported number of repetition transmissions is added to the retained row indexes.

Optionally, in this embodiment of this application, the set of numbers of repetition transmissions indicated by the indication information of the number of repetition transmissions is indicated by defining a newly added PDSCH time domain resource allocation table that supports repetition transmission.

It should be noted that, whether the default PDSCH time domain resource allocation table or the newly added PDSCH time domain resource allocation table that supports repetition transmission is used may be determined by using an RRC parameter or based on whether the terminal supports common PDSCH repetition transmission.

An embodiment of this application provides a common PDSCH repetition transmission indication method. The terminal may determine, based on at least one number of repetition transmissions indicated by first indication information, a number of repetition transmissions for common PDSCH repetition transmission. To be specific, repetition transmission of a common PDSCH is supported based on an indication of a number of repetition transmissions by the first indication information, so that transmission of a downlink channel meets a link budget requirement in a link budget, thereby improving reliability of common PDSCH transmission, and improving a coverage capability of a network.

Optionally, in this embodiment of this application, with reference to FIG. 2, as shown in FIG. 3, after step 202, the common PDSCH repetition transmission indication method provided in this embodiment of this application further includes the following step 301.

Step 301: The terminal determines, based on fourth indication information, whether repetition transmission is enabled for the first downlink transmission.

Optionally, in this embodiment of this application, the fourth indication information is the first indication information or other indication information, and the other indication information is used to indicate to enable or disable repetition transmission of the first downlink transmission.

A manner in which the terminal determines, based on the first indication information, whether to enable repetition transmission for the first downlink transmission is as follows: In a case that the number of repetition transmissions for the first downlink transmission is configured in the first indication information, the terminal considers that the network enables repetition transmission for the first downlink transmission.

It may be understood that an implicit indication manner is provided herein. To be specific, as long as a number of repetition transmissions is configured, the terminal considers that repetition transmission for the first downlink transmission is enabled (enable). For example, when a candidate (candidate) number of repetition transmissions for common PDSCH repetition transmission is configured in SIB1, the terminal considers that the network enables the common PDSCH repetition transmission.

The terminal determines, based on other indication information, a manner of determining whether repetition transmission is enabled for the first downlink transmission, where the other indication information is any one of the following:

one piece of indication information semi-statically configured on the network side to indicate to enable or disable repetition transmission for the first downlink transmission; and

one piece of indication information dynamically indicated on the network side to indicate to enable or disable repetition transmission for the first downlink transmission.

It may be understood that the indication information herein is an explicit indication manner. For example, the network configures CommonPDSCHRepetition-r18 in the SIB1 to indicate to enable or disable (disable) the common PDSCH repetition transmission.

For dynamic indication of enabling or disabling repetition transmission for the first downlink transmission, for example, when the network configures one number of repetition transmissions in the SIB, enabling/disabling of the common PDSCH repetition transmission may be indicated by using the dynamic indication in the DCI, or by scrambling the DCI with different RNTIs, or by using different scrambling code sequences.

Optionally, in this embodiment of this application, the foregoing fourth indication information is semi-statically configured, is dynamically indicated, or is specified in a protocol. It should be noted that, for manners such as semi-static configuration, dynamic indication, and specification in the protocol herein, reference may be made to the description in the foregoing embodiment, and details are not described herein again.

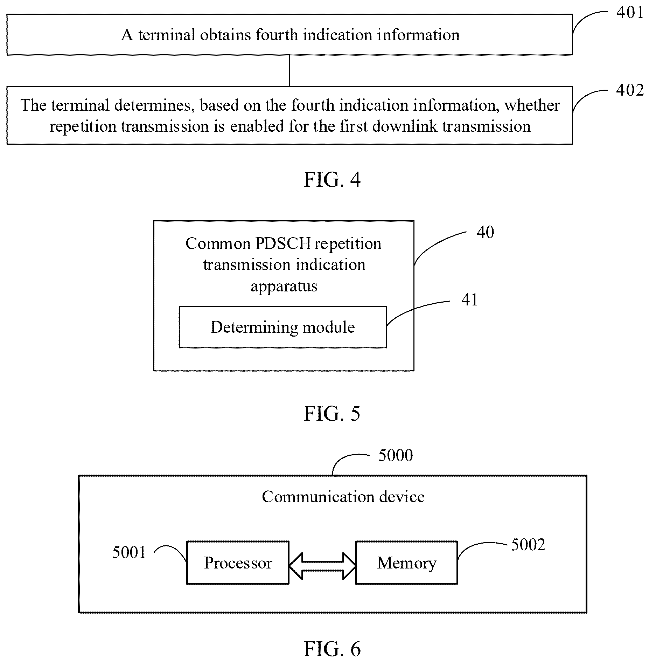

An embodiment of this application further provides a common PDSCH repetition transmission indication method. FIG. 4 is a flowchart of a common PDSCH repetition transmission indication method according to an embodiment of this application. As shown in FIG. 4, the common PDSCH repetition transmission indication method provided in this embodiment of this application may include the following step 401 and step 402.

Step 401: A terminal obtains fourth indication information.

Optionally, in this embodiment of this application, the foregoing fourth indication information may be semi-statically configured, may be dynamically indicated, or may be specified in a protocol.

Step 402: The terminal determines, based on the fourth indication information, whether repetition transmission is enabled for the first downlink transmission.

Optionally, in this embodiment of this application, the fourth indication information is the first indication information or other indication information, and the other indication information is used to indicate to enable or disable repetition transmission of the first downlink transmission.

A manner in which the terminal determines, based on the first indication information, whether to enable repetition transmission for the first downlink transmission is as follows: In a case that the number of repetition transmissions for the first downlink transmission is configured in the first indication information, the terminal considers that the network enables repetition transmission for the first downlink transmission.

It may be understood that an implicit indication manner is provided herein. To be specific, as long as a number of repetition transmissions is configured, the terminal considers that repetition transmission for the first downlink transmission is enabled (enable). For example, when a candidate (candidate) number of repetition transmissions for common PDSCH repetition transmission is configured in SIB1, the terminal considers that the network enables the common PDSCH repetition transmission.

It should be noted that, for description of the first indication information herein, reference may be made to the description in the foregoing embodiment, and details are not described herein again.

The terminal determines, based on other indication information, a manner of determining whether repetition transmission is enabled for the first downlink transmission, where the other indication information is any one of the following:

one piece of indication information semi-statically configured on the network side to indicate to enable or disable repetition transmission for the first downlink transmission; and
one piece of indication information dynamically indicated on the network side to indicate to enable or disable repetition transmission for the first downlink transmission.

It may be understood that the indication information herein is an explicit indication manner. For example, the network configures CommonPDSCHRepetition-r18 in the SIB1 to indicate to enable or disable (disable) the common PDSCH repetition transmission.

For dynamic indication of enabling or disabling repetition transmission for the first downlink transmission, for example, when the network configures one number of repetition transmissions in the SIB, enabling/disabling of the common PDSCH repetition transmission may be indicated by using the dynamic indication in the DCI, or by scrambling the DCI with different RNTIs, or by using different scrambling code sequences.

Optionally, in this embodiment of this application, in a case that the foregoing fourth indication information is semi-statically configured, the foregoing semi-static indication may be indicated by system information (SI) or an RRC message. The system information includes at least one of an MIB and an SIB.

Optionally, in this embodiment of this application, a specific manner in which the foregoing semi-static indication is indicated by the RRC message includes any one of the following:

(1) A new RRC parameter is introduced into the PDSCH-ConfigCommon, which is specially used to indicate to enable or disable repetition transmission for the first downlink transmission.

(2) When the parameter PDSCH-TimeDomainAllocationList (PDSCH time domain allocation table) in the PDSCH-ConfigCommon indicates time domain resource allocation, and indicates enabling or disabling of repetition transmission for the first downlink transmission at the same time.

Optionally, in this embodiment of this application, in a case that the fourth indication information is dynamically indicated, the dynamic indication is indicated by the common PDSCH repetition transmission; or the dynamic indication is indicated by the scheduling DCI corresponding to the common PDSCH repetition transmission.

Optionally, in this embodiment of this application, the dynamic indication is indicated by a scrambling sequence of the common PDSCH repetition transmission.

Optionally, in this embodiment of this application, in a case that the dynamic indication is indicated by the scrambling sequence of the common PDSCH repetition transmission, the common PDSCH repetition transmission is scrambled by a first identifier, and the first identifier corresponds to enabling or disabling repetition transmission.

Optionally, in this embodiment of this application, in a case that the dynamic indication is indicated by the scrambling sequence of the common PDSCH repetition transmission, a DMRS sequence of the common PDSCH repetition transmission or an identifier that generates a sequence initial value corresponds to enabling or disabling repetition transmission.

Optionally, in this embodiment of this application, the dynamic indication is indicated by any one of the following:

indicated by an RNTI that scrambles the scheduling DCI;
indicated by a DMRS sequence of a PDCCH on which the scheduling DCI is located; and
indicated by a field in the scheduling DCI.

Optionally, in this embodiment of this application, in a case that the dynamic indication is indicated by the RNTI that scrambles the scheduling DCI, the scheduling DCI is scrambled by a first RNTI, and the first RNTI corresponds to enabling or disabling repetition transmission.

Optionally, in this embodiment of this application, the scheduling DCI scrambled by the first RNTI includes any one of the following:

a first DCI format with CRC scrambled by a TC-RNTI (DCI format 1_0 with CRC scrambled by TC-RNTI);
a first DCI format with CRC scrambled by an RA-RNTI (DCI format 1_0 with CRC scrambled by RA-RNTI); and
a first DCI format with CRC scrambled by an MsgB-RNTI (DCI format 1_0 with CRC scrambled by MsgB-RNTI).

Optionally, in this embodiment of this application, in a case that the dynamic indication is indicated by the field in the scheduling DCI, the scheduling DCI indicates, by using a first indication field, to enable or disable repetition transmission, where the first indication field is an existing field or a newly added indication field in the scheduling DCI.

Optionally, in this embodiment of this application, in a case that the first indication field is an existing field in the scheduling DCI,

(1) for the scheduling DCI corresponding to a downlink data channel used to carry the Msg2 or the MsgB, the foregoing first indication field includes at least one of the following: a modulation and coding scheme (Modulation and coding scheme) field, a TB scaling (TB scaling) field, and a reserved bits (Reserved bits) field; and

(2) for the scheduling DCI corresponding to a downlink data channel used to carry the Msg4, the foregoing first indication field includes at least one of the following: a modulation and coding scheme field, a new data indicator (New data indicator) field, a redundancy version (Redundancy version) field, a downlink assignment index (Downlink assignment index) field, a field of an indicator of timing between a downlink data channel and a HARQ (PDSCH-to-HARQ_feedback timing indicator), and a reserved bits field.

It should be noted that, the first indication field herein including at least one of the following means that indication may be performed by using some or all bits of one field in these fields, or joint indication may be performed by using some or all bits of different fields.

Optionally, in this embodiment of this application, in a case that the first indication information is specified in a protocol, the first indication information is indication information for enabling or disabling repetition transmission in the PDSCH time domain resource allocation table. In this way, enabling or disabling repetition transmission for the first downlink transmission is specified in the protocol, without increasing additional signaling overheads.

Optionally, in this embodiment of this application, the foregoing indication information for enabling or disabling repetition transmission is indicated by modifying a default PDSCH time domain resource allocation table.

Optionally, in this embodiment of this application, the foregoing manner of modifying the default PDSCH time domain resource allocation table may include at least one of the following:

(1) An information column is added to indicate to enable or disable repetition transmission for the first downlink transmission.
(2) The table is extended, that is, some row indexes (row index) are added to a lower part of the default PDSCH time domain resource allocation table. In this case, 1 bit or a plurality of bits need to be added to indicate a new row index.
(3) Some row indexes are deleted, and an indication of enabling or disabling repetition transmission for the first downlink transmission is added to the retained row indexes.

Optionally, in this embodiment of this application, the foregoing indication information for enabling or disabling repetition transmission is indicated by defining a newly added PDSCH time domain resource allocation table that supports repetition transmission.

An embodiment of this application provides a common PDSCH repetition transmission indication method. The terminal may enable or disable repetition transmission for the first downlink transmission based on the indication of the fourth indication information, thereby improving flexibility and reliability of the common PDSCH repetition transmission.

The following describes, by using specific implementations (implementation 1 to implementation 3), related solutions and examples involved in the common PDSCH repetition transmission indication method in the embodiments of this application.

**Implementation 1: semi-static configuration of a number of repetition transmissions**

To support common PDSCH repetition transmission, one or more values of the number of repetition transmissions may be semi-statically configured for the number of repetition transmissions for the common PDSCH repetition transmission. There are the following cases:

(1) Configuring one value of the number of repetition transmissions:

In some embodiments, one value of the number of repetition transmissions is configured by using system information (SI), which is the number of repetition transmissions for the common PDSCH repetition transmission. The SI herein may be an MIB, or may be an SIB.

In some embodiments, one value of the number of repetition transmissions is configured by using an RRC message, which is the number of repetition transmissions for the common PDSCH repetition transmission. For example, a new RRC parameter is introduced into the PDSCH-ConfigCommon, which is specially used to indicate the number of repetition transmissions. Alternatively, when the parameter pdsch-TimeDomainAllocationList in the PDSCH-ConfigCommon indicates time domain resource allocation, an indication of the number of repetition transmissions is added.

Further, an indication of enabling/disabling may be added to corresponding scheduling DCI to enable or disable the number of repetition transmissions that is semi-statically configured. In other words, a number of repetition transmissions is semi-statically configured, but the number of repetition transmissions may be used or not used based on the corresponding scheduling DCI. If the number of repetition transmissions is not used, it indicates that repetition transmission of a common PDSCH is not performed.

It should be noted that, with respect to the foregoing corresponding scheduling DCI, for example, for an Msg2 PDSCH, the corresponding DCI is DCI for scheduling the Msg2 PDSCH.

(2) Configuring a plurality of values of the number of repetition transmissions:

In some embodiments, a plurality of values of the number of repetition transmissions, that is, a set of numbers of repetition transmissions, are configured by using SI, and indication needs to be further performed to select one value of the number of repetition transmissions from the set of numbers of repetition transmissions, to determine a final number of repetition transmissions. The SI herein may be an MIB, or may be an SIB such as SIB1.

In some embodiments, a plurality of values of the number of repetition transmissions, that is, a set of numbers of repetition transmissions, are configured by using an RRC message, and indication needs to be further performed to select one value of the number of repetition transmissions from the set of numbers of repetition transmissions, to be determined as the number of repetition transmissions for the common PDSCH repetition transmission. For example, a new RRC parameter is introduced into the PDSCH-ConfigCommon, which is specially used to indicate the set of numbers of repetition transmissions. Alternatively, an indication of the set of numbers of repetition transmissions is added to the parameter pdsch-TimeDomainAllocationList in the PDSCH-ConfigCommon.

The further indication herein may be a dynamic indication. The dynamic indication may be indicated by a field in the DCI, or may be indicated by an RNTI that scrambles the DCI, or may be indicated by a DMRS sequence of a PDCCH on which the scheduling DCI is located, or may be indicated by a scrambling sequence of the common PDSCH repetition transmission.

For example, the field in the scheduling DCI is used to further indicate to select a specific value of the number of repetition transmissions from the set of numbers of repetition transmissions, which is the number of repetition transmissions for the common PDSCH repetition transmission.

For another example, a TDRA field in the DCI is used to indicate a specific entry of the PDSCH-TimeDomainAllocationList, and a repetition factor under the entry is used as the number of repetition transmissions for the common PDSCH repetition transmission.

In some embodiments, a PDSCH TDRA table (also referred to as a TDRA list) supporting common PDSCH repetition transmission is specially configured by using SI. For example, one repetition factor is defined for each entry of the configured TDRA list.

**Implementation 2: specification of a number of repetition transmissions in a protocol**

In order not to increase additional signaling overheads, the number of repetition transmissions for the common PDSCH repetition transmission may be indicated by modifying a default PDSCH time domain resource allocation A or by using a newly added PDSCH time domain resource allocation table that supports repetition, or the protocol specifies a default set of numbers of repetition transmissions. There are the following cases:

For an existing default PDSCH time domain resource allocation A, reference is made to descriptions of Table 2 and Table 3 in the foregoing embodiments.

In some embodiments, the number of repetition transmissions is indicated by modifying the default PDSCH time domain resource allocation table (for example, TDRA table A).

Specifically, a modification manner may include at least one of the following:

Manner 1: An information column is added to indicate a number of repetition transmissions (repetition number).
Manner 2: The table is extended, that is, some row indexes are added to a lower part of the default table. In this case, 1 bit or a plurality of bits need to be added to indicate a new row index.
Manner 3: Some row indexes are deleted, and a supported number of repetition transmissions is added to the retained row indexes.

As shown in Table 6, for a normal CP, the number of repetition transmissions is indicated by adding an information column (for example, a **Repetition number column** in Table 6 below).

**Table 6: Manner 1 (for normal CP)**

| Row index | DMRS-TypeA-Position | PDSCH mapping type | $K_0$ | S | L | **Repetition number** |
|---|---|---|---|---|---|---|
| 1 | 2 | Type A | 0 | 2 | 12 | **2** |
| | 3 | Type A | 0 | 3 | 11 | **4** |
| 2 | 2 | Type A | 0 | 2 | 10 | **2** |
| | 3 | Type A | 0 | 3 | 9 | **4** |
| 3 | 2 | Type A | 0 | 2 | 9 | **2** |
| | 3 | Type A | 0 | 3 | 8 | **4** |
| 4 | 2 | Type A | 0 | 2 | 7 | **2** |
| | 3 | Type A | 0 | 3 | 6 | **4** |
| 5 | 2 | Type A | 0 | 2 | 5 | **2** |
| | 3 | Type A | 0 | 3 | 4 | **8** |
| 6 | 2 | Type B | 0 | 9 | 4 | **1** |
| | 3 | Type B | 0 | 10 | 4 | **2** |
| 7 | 2 | Type B | 0 | 4 | 4 | **1** |
| | 3 | Type B | 0 | 6 | 4 | **2** |
| 8 | 2,3 | Type B | 0 | 5 | 7 | **4** |

(continued)

| Row index | DMRS-TypeA-Position | PDSCH mapping type | $K_0$ | S | L | Repetition number |
|---|---|---|---|---|---|---|
| 9 | 2,3 | Type B | 0 | 5 | 2 | **2** |
| 10 | 2,3 | Type B | 0 | 9 | 2 | **2** |
| 11 | 2,3 | Type B | 0 | 12 | 2 | **2** |
| 12 | 2,3 | Type A | 0 | 1 | 13 | **4** |
| 13 | 2,3 | Type A | 0 | 1 | 6 | **4** |
| 14 | 2,3 | Type A | 0 | 2 | 4 | **2** |
| 15 | 2,3 | Type B | 0 | 4 | 7 | **4** |
| 16 | 2,3 | Type B | 0 | 8 | 4 | **2** |

As shown in Table 7, for a normal CP, the number of repetition transmissions is indicated by extending the table and adding some row indexes (for example, **Row indexes 17 to 32** in Table 7 below).

**Table 7: Manner 2 (for normal CP)**

| Row index | DMRS-TypeA-Position | PDSCH mapping type | $K_0$ | S | L | Repetition number |
|---|---|---|---|---|---|---|
| 1 | 2 | Type A | 0 | 2 | 12 | **1** |
| | 3 | Type A | 0 | 3 | 11 | **1** |
| 2 | 2 | Type A | 0 | 2 | 10 | **1** |
| | 3 | Type A | 0 | 3 | 9 | **1** |
| 3 | 2 | Type A | 0 | 2 | 9 | **1** |
| | 3 | Type A | 0 | 3 | 8 | **1** |
| 4 | 2 | Type A | 0 | 2 | 7 | **1** |
| | 3 | Type A | 0 | 3 | 6 | **1** |
| 5 | 2 | Type A | 0 | 2 | 5 | **1** |
| | 3 | Type A | 0 | 3 | 4 | **1** |
| 6 | 2 | Type B | 0 | 9 | 4 | **1** |
| | 3 | Type B | 0 | 10 | 4 | **1** |
| 7 | 2 | Type B | 0 | 4 | 4 | **1** |
| | 3 | Type B | 0 | 6 | 4 | **1** |
| 8 | 2,3 | Type B | 0 | 5 | 7 | **1** |
| 9 | 2,3 | Type B | 0 | 5 | 2 | **1** |
| 10 | 2,3 | Type B | 0 | 9 | 2 | **1** |
| 11 | 2,3 | Type B | 0 | 12 | 2 | **1** |
| 12 | 2,3 | Type A | 0 | 1 | 13 | **1** |
| 13 | 2,3 | Type A | 0 | 1 | 6 | **1** |
| 14 | 2,3 | Type A | 0 | 2 | 4 | **1** |
| 15 | 2,3 | Type B | 0 | 4 | 7 | **1** |
| 16 | 2,3 | Type B | 0 | 8 | 4 | **1** |
| **17** | **2** | **Type A** | **0** | **2** | **12** | **2** |
| | **3** | **Type A** | **0** | **3** | **11** | **2** |

(continued)

| Row index | DMRS-TypeA-Position | PDSCH mapping type | $K_0$ | S | L | **Repetition number** |
|---|---|---|---|---|---|---|
| **18** | **2** | **Type A** | **0** | **2** | **12** | **4** |
|  | **3** | **Type A** | **0** | **3** | **11** | **4** |
| **19** | **2** | **Type A** | **0** | **2** | **12** | **8** |
|  | **3** | **Type A** | **0** | **3** | **11** | **8** |
| **20** | **2** | **Type A** | **0** | **2** | **12** | **16** |
|  | **3** | **Type A** | **0** | **3** | **11** | **16** |
| **21** | **2** | **Type A** | **0** | **2** | **7** | **2** |
|  | **3** | **Type A** | **0** | **3** | **6** | **2** |
| **22** | **2** | **Type A** | **0** | **2** | **7** | **4** |
|  | **3** | **Type A** | **0** | **3** | **6** | **4** |
| **23** | **2** | **Type A** | **0** | **2** | **7** | **8** |
|  | **3** | **Type A** | **0** | **3** | **6** | **8** |
| **24** | **2** | **Type B** | **0** | **4** | **4** | **2** |
|  | **3** | **Type B** | **0** | **6** | **4** | **2** |
| **25** | **2** | **Type B** | **0** | **4** | **4** | **4** |
|  | **3** | **Type B** | **0** | **6** | **4** | **4** |
| **26** | **2** | **Type B** | **0** | **4** | **4** | **8** |
|  | **3** | **Type B** | **0** | **6** | **4** | **8** |
| **27** | **2** | **Type B** | **0** | **9** | **4** | **2** |
|  | **3** | **Type B** | **0** | **10** | **4** | **2** |
| **28** | **2** | **Type B** | **0** | **9** | **4** | **4** |
|  | **3** | **Type B** | **0** | **10** | **4** | **4** |
| **29** | **2** | **Type B** | **0** | **9** | **4** | **8** |
|  | **3** | **Type B** | **0** | **10** | **4** | **8** |
| **30** | **2,3** | **Type A** | **0** | **1** | **11** | **4** |
| **31** | **2,3** | **Type A** | **0** | **1** | **11** | **8** |
| **32** | **2,3** | **Type A** | **0** | **1** | **11** | **16** |

As shown in Table 8, for a normal CP, content of some row indexes (for example, **Row indexes 2, 4, 6, 9-11, and 13** in Table 8 below) is deleted, and a supported number of repetition transmissions is added to these retained row indexes. It should be noted that, in Table 8, the deleted row indexes are illustrated by using a strikethrough, and the supported number of repetition transmissions being added to the corresponding row indexes is illustrated by using a boldfaced font.

**Table 8: Manner 3 (for normal CP)**

| Row index | DMRS-TypeA-Position | PDSCH mapping type | $K_0$ | S | L | **Repetition number** |
|---|---|---|---|---|---|---|
| 1 | 2 | Type A | 0 | 2 | 12 | **2** |
|  | 3 | Type A | 0 | 3 | 11 | **2** |
| **2** | **2** | **Type A** | **0** | **2** | **12** | 4 |
|  | **3** | **Type A** | **0** | **3** | **11** | 4 |
|  |  |  |  | 2 |  |  |
|  |  |  |  |  |  |  |

(continued)

| Row index | DMRS-TypeA-Position | PDSCH mapping type | $K_0$ | S | L | **Repetition number** |
|---|---|---|---|---|---|---|
| 3 | 2 | Type A | 0 | 2 | 9 | **2** |
|  | 3 | Type A | 0 | 3 | 8 | **2** |
| **4** | **2** | **Type A** | **0** | **2** | **9** | **4** |
|  | **3** | **Type A** | **0** | **3** | **8** | **4** |
| *4* |  |  |  | 2 |  |  |
|  |  |  |  |  |  |  |
| 5 | 2 | Type A | 0 | 2 | 5 | 2 |
|  | 3 | Type A | 0 | 3 | 4 | 2 |
| **6** | **2** | **Type A** | **0** | **2** | **5** | **4** |
|  | **3** | **Type A** | **0** | **3** | **4** | **4** |
|  |  |  |  |  |  |  |
|  |  |  |  |  |  |  |
| 7 | 2 | Type B | 0 | 4 | 4 | **2** |
|  | 3 | Type B | 0 | 6 | 4 | **2** |
| 8 | 2,3 | Type B | 0 | 5 | 7 | **2** |
| **9** | **2,3** | **Type B** | **0** | **5** | **7** | **4** |
| **10** | **2,3** | **Type B** | **0** | **5** | **7** | **8** |
| **11** | **2,3** | **Type B** | 0 | **5** | **7** | **16** |
|  |  |  |  |  | 2 |  |
|  |  |  |  |  |  |  |
|  |  |  |  |  | 2 |  |
| 12 | 2,3 | Type A | 0 | 1 | 13 | **4** |
| **13** | **2,3** | **Type A** | **0** | **1** | **13** | **8** |
|  |  |  |  |  |  |  |
| 14 | 2,3 | Type A | 0 | 2 | 4 | **4** |
| 15 | 2,3 | Type B | 0 | 4 | 7 | **8** |
| 16 | 2,3 | Type B | 0 | 8 | 4 | **2** |

It should be noted that, for descriptions of $K_0$, S, and L in the foregoing tables, reference may be made to the descriptions in Table 2 and Table 3 in the foregoing embodiment, and details are not described herein again. The foregoing table is merely an example, and does not represent a unique modification manner. For an extended CP, a similar modification manner is used.

In some embodiments, a newly added PDSCH time domain resource allocation table that supports repetition may be defined to indicate the repetition number, and whether the default table (for example, the TDRA table A) or this newly added table is used may be determined by using an RRC parameter or based on whether the terminal supports common PDSCH repetition transmission.

Table 9 shows an example of the newly added PDSCH time domain resource allocation table that supports repetition.

**Table 9**

| Row index | DMRS-TypeA-Position | PDSCH mapping type | $K_0$ | S | L | Repetition number |
|---|---|---|---|---|---|---|
| 1 | 2 | Type A | 0 | 2 | 12 | 2 |
|  | 3 | Type A | 0 | 3 | 11 | 2 |

(continued)

| Row index | DMRS-TypeA-Position | PDSCH mapping type | $K_0$ | S | L | Repetition number |
|---|---|---|---|---|---|---|
| 2 | 2 | Type A | 0 | 2 | 12 | 4 |
| | 3 | Type A | 0 | 3 | 11 | 4 |
| 3 | 2 | Type A | 0 | 2 | 12 | 8 |
| | 3 | Type A | 0 | 3 | 11 | 8 |
| 4 | 2 | Type A | 0 | 2 | 12 | 16 |
| | 3 | Type A | 0 | 3 | 11 | 16 |
| 5 | 2 | Type A | 0 | 2 | 7 | 2 |
| | 3 | Type A | 0 | 3 | 6 | 2 |
| 6 | 2 | Type A | 0 | 2 | 7 | 4 |
| | 3 | Type A | 0 | 3 | 6 | 4 |
| 7 | 2 | Type A | 0 | 2 | 7 | 8 |
| | 3 | Type A | 0 | 3 | 6 | 8 |
| 8 | 2 | Type B | 0 | 4 | 4 | 2 |
| | 3 | Type B | 0 | 6 | 4 | 2 |
| 9 | 2 | Type B | 0 | 4 | 4 | 4 |
| | 3 | Type B | 0 | 6 | 4 | 4 |
| 10 | 2 | Type B | 0 | 4 | 4 | 8 |
| | 3 | Type B | 0 | 6 | 4 | 8 |
| 11 | 2 | Type B | 0 | 9 | 4 | 2 |
| | 3 | Type B | 0 | 10 | 4 | 2 |
| 12 | 2 | Type B | 0 | 9 | 4 | 4 |
| | 3 | Type B | 0 | 10 | 4 | 4 |
| 13 | 2 | Type B | 0 | 9 | 4 | 8 |
| | 3 | Type B | 0 | 10 | 4 | 8 |
| 14 | 2,3 | Type A | 0 | 1 | 11 | 4 |
| 15 | 2,3 | Type A | 0 | 1 | 11 | 8 |
| 16 | 2,3 | Type A | 0 | 1 | 11 | 16 |

It should be noted that, the foregoing table is merely an example, and does not represent a unique modification manner. For an extended CP, a similar adding manner is used.

In some embodiments, a plurality of value candidates of the number of repetition transmissions, that is, a set of numbers of repetition transmissions, may be determined through specification in a protocol, and indication needs to be further performed to select one value of the number of repetition transmissions from the set of numbers of repetition transmissions, to be determined as the number of repetition transmissions for the common PDSCH repetition transmission.

For example, the plurality of value candidates of the number of repetition transmissions herein may be at least one of {1, 2, 4, 8, 16, 32}, and the set of numbers of repetition transmissions is any subset of the set {1, 2, 4, 8, 16, 32}.

The further indication herein may be a dynamic indication. The dynamic indication may be indicated by a field in the DCI, or may be indicated by an RNTI that scrambles the DCI, or may be indicated by a DMRS sequence of a PDCCH on which the scheduling DCI is located, or may be indicated by a scrambling sequence of the common PDSCH repetition transmission.

For example, the field in the scheduling DCI is used to further indicate to select a specific value of the number of repetition transmissions from the set of numbers of repetition transmissions, which is the number of repetition transmissions for the common PDSCH repetition transmission.

Implementation 3: dynamic indication of a number of repetition transmissions

To support common PDSCH repetition transmission, the number of repetition transmissions for the common PDSCH repetition transmission may be dynamically indicated. There are the following cases:

In combination with the descriptions of the foregoing embodiments, the dynamic indication may be that a number of repetition transmissions such as a repetition factor is directly indicated, or may be that a number of repetition transmissions selected from a set of numbers of repetition transmissions, such as an index in the set of numbers of repetition transmissions, is further indicated based on the set, and the index may be used to indicate the number of repetition transmissions selected from the set.

In some embodiments, different identifiers (IDs) may be used to scramble a PDSCH of common PDSCH repetition transmission, and the different IDs may correspond to different repetition factors or different indexes in the set of numbers of repetition transmissions.

In some embodiments, different sequences or different IDs that generate sequence initial values of a PDSCH DMRS for common PDSCH repetition transmission may be used, and the different sequences or different IDs may correspond to different repetition factors or different indexes in the set of numbers of repetition transmissions.

In some embodiments, different RNTIs may be used to scramble DCI for scheduling the common PDSCH repetition transmission, and the different RNTIs may correspond to different repetition factors or different indexes in the set of numbers of repetition transmissions.

In some embodiments, an indication field may be added to the DCI for scheduling the common PDSCH repetition transmission to indicate different repetition factors or different indexes in the set of numbers of repetition transmissions.

In some embodiments, a first field (an existing field) in the DCI for scheduling the common PDSCH repetition transmission may be redefined to correspond to different repetition factors or different indexes in the set of numbers of repetition transmissions.

For an Msg2/MsgB PDSCH, the foregoing first field includes but is not limited to at least one of the following:

modulation and coding scheme field;
TB scaling field; and
reserved bits field.

For an Msg4 PDSCH, the foregoing first field includes but is not limited to at least one of the following:

modulation and coding scheme field;
new data indicator field;
redundancy version (RV for short) field;
downlink assignment index field;
PDSCH-to-HARQ_feedback timing indicator field; and
reserved bits field.

It should be noted that, herein, being not limited to at least one of the following means that indication may be performed by using some or all bits of one field in these fields, or joint indication may be performed by using some or all bits of different fields.

In some embodiments, some bits in the modulation and coding scheme field (MCS field for short) are used to indicate the number of repetition transmissions. For example, 2 most significant bits are used to indicate the number of repetition transmissions, and the set of numbers of repetition transmissions is indicated as {1, 2, 4, 8} by using an RRC parameter, system information, or preconfiguration. A specific correspondence is not limited to the following Table 10:

**Table 10**

| 2 bits of MSB in modulation and coding scheme | Repetition factor |
|---|---|
| '00' | 1 |
| '01' | 2 |
| '10' | 4 |
| '11' | 8 |

If the set of numbers of repetition transmissions is indicated as {2, 4} by using an RRC parameter, system information, or preconfiguration, only some bits in the MCS field may be used to indicate the number of repetition transmissions. A specific correspondence is not limited to the following Table 11:

**Table 11**

| 1 bit of MSB in modulation and coding scheme | Repetition factor |
|---|---|
| '0' | 2 |
| '1' | 4 |

In some embodiments, the TB scaling field is used to indicate the number of repetition transmissions. The set of numbers of repetition transmissions herein may be indicated by using an RRC parameter, system information, or preconfiguration (for example, preconfigured to be {1, 2, 4, 8}).

For example, in a case that the set of numbers of repetition transmissions is {1, 2, 4, 8}, a correspondence between TB scaling and a repetition factor may be but is not limited to the following Table 12:

**Table 12**

| TB scaling field | Scaling factor S | Repetition factor |
|---|---|---|
| '00' | 1 | 1 |
| '01' | 0.5 | 2 |
| '10' | 0.25 | 4 |
| '11' | | 8 |

For another example, the number of repetition transmissions may be a function of the scaling factor. For example, the number of repetition transmissions is a reciprocal of the scaling factor S, and repetition is not performed in a case that S is not defined. The existing scaling factor supports only the following three numbers. In this case, the repetition number can support only {1, 2, 4}, as shown in Table 13 below:

**Table 13**

| TB scaling field | Scaling factor S |
|---|---|
| 00 | 1 |
| 01 | 0.5 |
| 10 | 0.25 |
| 11 | |

Alternatively, the number of repetition transmissions is 2*(1/S), and repetition is not performed in a case that S is not defined. In this case, the repetition number may be {1, 2, 4, 8}, which respectively corresponds to S={no definition, 1, 0.5, 0.25}.

According to the foregoing methods, in a case that TB scaling is relatively small, that is, coverage (coverage) is relatively poor, a relatively large number of repetition transmissions may be configured, and signaling overheads may be reduced.

In some embodiments, the redundancy version field is used to indicate the number of repetition transmissions. For example, a redundancy version sequence is configured to be {0, 0, 0, 0}, which means that a redundancy version sequence corresponding to msg4 PDSCH repetition is {0, 0, 0, 0}, that is, RV0 is always used. The set of numbers of repetition transmissions is indicated as {1, 2, 4, 8} by using an RRC parameter, system information, or preconfiguration. A specific correspondence may be but is not limited to the following Table 14:

**Table 14**

| Redundancy version field | Repetition factor |
|---|---|
| '00' | 1 |
| '01' | 2 |
| '10' | 4 |

(continued)

| Redundancy version field | Repetition factor |
|---|---|
| '11' | 8 |

In some embodiments, the new data indicator field and some bits of the redundancy version field are used to jointly indicate the number of repetition transmissions. For example, when the redundancy version sequence is configured to be {0, 3, 0, 3}, it means that the redundancy version sequence corresponding to msg4 PDSCH repetition is {0, 3, 0, 3}. In this case, the RV may be determined only by using a least significant bit of the redundancy version field. In addition, in this case, a corresponding HARQ process ID is configured to be disabled feedback. The set of numbers of repetition transmissions is indicated as {1, 2, 4, 8} by using an RRC parameter, system information, or preconfiguration. A specific correspondence is not limited to the following Table 15:

**Table 15**

| MSB of Redundancy version field + New data indicator | Repetition factor |
|---|---|
| '0', '0' | 1 |
| '0', '1' | 2 |
| '1', '0' | 4 |
| '1', '1' | 8 |

It should be noted that the DCI format 1_0 for scheduling the Msg2 PDSCH and the MsgB PDSCH does not include the redundancy version field. However, to support the Msg2/MsgB PDSCH repetition, an RV of the DCI format 1_0 needs to be determined. For example, an RV sequence of the DCI format 1_0 may be determined to be {0, 0, 0, 0}, {0, 3, 0, 3}, or {0, 2, 3, 1} by using system information or an RRC message or through specification in a protocol. A new field may be added to the scheduling DCI to indicate an RV_ID or specify a default RV_ID=0. Then, an RV of specific repetition is determined according to the following Table 16:

**Table 16: RV used when repetition transmission is enabled**

| $RV_{id}$ indicated by the DCI scheduling the PDSCH | $RV_{id}$ to be applied to $n^{th}$ transmission occasion | | | |
|---|---|---|---|---|
| | n mod 4=0 | n mod 4=1 | n mod 4=2 | n mod 4=3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

In some embodiments, the downlink assignment index field is used to indicate the number of repetition transmissions, and the set of numbers of repetition transmissions is indicated (for example, predefined as {1, 2, 4, 8}) by using an RRC parameter, system information, or preconfiguration. A specific correspondence is not limited to the following Table 17:

**Table 17**

| Downlink assignment index | Repetition factor |
|---|---|
| '00' | 1 |
| '01' | 2 |
| '10' | 4 |
| '11' | 8 |

In some embodiments, a part of the PDSCH-to-HARQ_feedback timing indicator field is used to indicate the number of repetition transmissions, and the set of numbers of repetition transmissions is indicated (for example, predefined as {2, 4}) by using an RRC parameter, system information, or preconfiguration. A specific correspondence is not limited to the following Table 18:

**Table 18**

| MSB of PDSCH-to-HARQ_feedback timing indicator field | Repetition factor |
|---|---|
| '0' | 2 |
| '1' | 4 |

In some embodiments, when the reserved bits field is not 0 bits, some bits of the reserved bits field are used to indicate the number of repetition transmissions, and the set of numbers of repetition transmissions is indicated (for example, predefined as {1, 2, 4, 8}) by using an RRC parameter, system information, or preconfiguration. A specific correspondence may be but is not limited to the following Table 19. For example, 2 least significant bits of the reserved bits are used to indicate the number of repetition transmissions.

**Table 19**

| 2 bits of LSB of reserved bits | Repetition factor |
|---|---|
| '00' | 1 |
| '01' | 2 |
| '10' | 4 |
| '11' | 8 |

In some embodiments, for the foregoing embodiments, the indication of the number of repetition transmissions (repetition) may be used in a case that the network is configured to enable common PDSCH repetition transmission.

The foregoing method embodiments or various possible implementations in the foregoing method embodiments may be separately performed, or any two or more embodiments or implementations may be performed in combination with each other. This may be specifically determined based on an actual use requirement. This is not limited in the embodiments of this application.

The common PDSCH repetition transmission indication method provided in the embodiments of this application may be performed by a common PDSCH repetition transmission indication apparatus. In the embodiments of this application, the common PDSCH repetition transmission indication apparatus provided in the embodiments of this application is described by using an example in which the common PDSCH repetition transmission indication apparatus performs the common PDSCH repetition transmission indication method.

FIG. 5 is a schematic diagram of a possible structure of a common PDSCH repetition transmission indication apparatus according to an embodiment of this application. As shown in FIG. 5, a common PDSCH repetition transmission indication apparatus 40 may include a determining module 41.

The determining module 41 is configured to determine a number of repetition transmissions for first downlink transmission based on first indication information, where the first indication information is used to indicate at least one number of repetition transmissions, and the first downlink transmission is common PDSCH repetition transmission.

An embodiment of this application provides a common PDSCH repetition transmission indication apparatus. The common PDSCH repetition transmission indication apparatus may determine, based on at least one number of repetition transmissions indicated by first indication information, a number of repetition transmissions for common PDSCH repetition transmission. To be specific, repetition transmission of a common PDSCH is supported based on an indication of a number of repetition transmissions by the first indication information, so that transmission of a downlink channel meets a link budget requirement in a link budget, thereby improving reliability of common PDSCH transmission, and improving a coverage capability of a network.

In a possible implementation, in a case that the first indication information indicates one number of repetition transmissions, the first indication information is semi-statically configured or dynamically indicated; or

in a case that the first indication information indicates a set of numbers of repetition transmissions, the first indication information is semi-statically configured or specified in a protocol, and the set of numbers of repetition transmissions includes at least two numbers of repetition transmissions.

In a possible implementation, in the case that the first indication information indicates one number of repetition transmissions, the one number of repetition transmissions is the number of repetition transmissions for the first downlink transmission;

or

in the case that the first indication information indicates a set of numbers of repetition transmissions, the number of repetition transmissions for the first downlink transmission is determined by second indication information, where the second indication information is used to indicate one number of repetition transmissions in the set of numbers of repetition transmissions, the one number of repetition transmissions is the number of repetition transmissions for the first downlink transmission, and the second indication information is semi-statically configured or dynamically indicated.

In a possible implementation, scheduling DCI corresponding to the common PDSCH repetition transmission includes third indication information, and the third indication information is used to enable or disable the number of repetition transmissions that is semi-statically configured or dynamically indicated.

In a possible implementation, the dynamic indication is indicated by the common PDSCH repetition transmission; or the dynamic indication is indicated by the scheduling DCI corresponding to the common PDSCH repetition transmission.

In a possible implementation, the dynamic indication is indicated by a scrambling sequence of the common PDSCH repetition transmission;

or

the dynamic indication is indicated by any one of the following:

    indicated by an RNTI that scrambles the scheduling DCI;
    indicated by a DMRS sequence of a PDCCH on which the scheduling DCI is located; and
    indicated by a field in the scheduling DCI.

In a possible implementation, the dynamic indication is indicated by a scrambling sequence of the common PDSCH repetition transmission;

    the common PDSCH repetition transmission is scrambled by a first identifier, and the first identifier corresponds to one repetition factor or one index in the set of numbers of repetition transmissions, to determine the one number of repetition transmissions; or
    a DMRS sequence of the common PDSCH repetition transmission or an identifier that generates a sequence initial value corresponds to one repetition factor or one index in the set of numbers of repetition transmissions, to determine the one number of repetition transmissions.

In a possible implementation, the dynamic indication is indicated by the RNTI that scrambles the scheduling DCI; and the scheduling DCI is scrambled by a first RNTI, and the first RNTI corresponds to one repetition factor or one index in the set of numbers of repetition transmissions, to determine the one number of repetition transmissions.

In a possible implementation, the scheduling DCI scrambled by the first RNTI includes any one of the following:

    a first DCI format with CRC scrambled by a TC-RNTI;
    a first DCI format with CRC scrambled by an RA-RNTI; and
    a first DCI format with CRC scrambled by an MsgB-RNTI.

In a possible implementation, the dynamic indication is indicated by the field in the scheduling DCI; and the scheduling DCI indicates, by using a first indication field, one repetition factor or one index in the set of numbers of repetition transmissions, to determine the one number of repetition transmissions, where the first indication field is an existing field or a newly added indication field in the scheduling DCI.

In a possible implementation, the first indication field is an existing field in the scheduling DCI;

    for the scheduling DCI corresponding to a downlink data channel used to carry the Msg2 or the MsgB, the foregoing first indication field includes at least one of the following: a modulation and coding scheme field, a TB scaling field, and a reserved bits field; and
    for the scheduling DCI corresponding to a downlink data channel used to carry the Msg4, the foregoing first indication field includes at least one of the following: a modulation and coding scheme field, a new data indicator field, a redundancy version field, a downlink assignment index field, a field of an indicator of timing between a downlink data channel and a HARQ, and a reserved bits field.

In a possible implementation, the first indication information is specified in a protocol;

    the first indication information directly indicates the set of numbers of repetition transmissions specified in the protocol;

or

the first indication information is indication information of a number of repetition transmissions in a PDSCH time domain resource allocation table, and the indication information of the number of repetition transmissions is used to indicate the set of numbers of repetition transmissions.

In a possible implementation, the set of numbers of repetition transmissions indicated by the indication information of the number of repetition transmissions is indicated by modifying a default PDSCH time domain resource allocation table;

or

the set of numbers of repetition transmissions indicated by the indication information of the number of repetition transmissions is indicated by defining a newly added PDSCH time domain resource allocation table that supports repetition transmission.

In a possible implementation, the determining module 41 is further configured to determine, based on fourth indication information, whether repetition transmission is enabled for the first downlink transmission.

The common PDSCH repetition transmission indication apparatus provided in this embodiment of this application can implement processes implemented by the terminal in the foregoing method embodiment, and same technical effects can be achieved. To avoid repetition, details are not described herein again.

The common PDSCH repetition transmission indication apparatus in this embodiment of this application may be a terminal, for example, a terminal having an operating system, or may be a component in the terminal, for example, an integrated circuit or a chip. For example, the terminal may include but is not limited to the foregoing listed types of the terminal 11. The another device may be a server, a network attached storage (Network Attached Storage, NAS), or the like. This is not specifically limited in this embodiment of this application.

Optionally, as shown in FIG. 6, an embodiment of this application further provides a communication device 5000, including a processor 5001 and a memory 5002. The memory 5002 stores a program or instructions executable on the processor 5001. For example, when the communication device 5000 is a terminal, and when the program or the instructions are executed by the processor 5001, the steps in the foregoing terminal-side method embodiment are implemented, and same technical effects can be achieved. To avoid repetition, details are not described herein again.

An embodiment of this application further provides a terminal, including a processor and a communication interface, where the processor is configured to determine a number of repetition transmissions for first downlink transmission based on first indication information, where the first indication information is used to indicate at least one number of repetition transmissions, and the first downlink transmission is common PDSCH repetition transmission. The terminal embodiment corresponds to the foregoing terminal-side method embodiment. Each implementation process and implementation of the foregoing method embodiment may be applied to the terminal embodiment, and the same technical effects can be achieved.

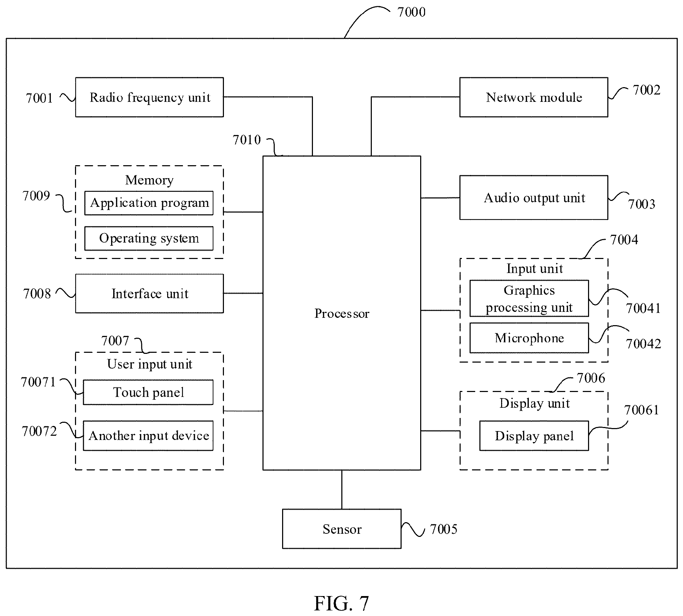

Specifically, FIG. 7 is a schematic diagram of a hardware structure of a terminal for implementing an embodiment of this application.

A terminal 7000 includes but is not limited to at least some components in a radio frequency unit 7001, a network module 7002, an audio output unit 7003, an input unit 7004, a sensor 7005, a display unit 7006, a user input unit 7007, an interface unit 7008, a memory 7009, a processor 7010, and the like.

A person skilled in the art may understand that the terminal 7000 may further include a power supply (for example, a battery) that supplies power to each component. The power supply may be logically connected to the processor 7010 by using a power management system, to implement functions such as charging management, discharging management, and power consumption management by using the power management system. The structure of the terminal shown in FIG. 7 does not constitute a limitation on the terminal. The terminal may include more or fewer components than those shown in the figure, or combine some components, or have different component arrangements. Details are not described herein again.

It should be understood that in this embodiment of this application, the input unit 7004 may include a graphics processing unit (Graphics Processing Unit, GPU) 70041 and a microphone 70042. The graphics processing unit 70041 processes image data of a still picture or a video obtained by an image capture apparatus (for example, a camera) in a video capture mode or an image capture mode. The display unit 7006 may include a display panel 70061, and the display panel 70061 may be configured in a form of a liquid crystal display, an organic light-emitting diode, or the like. The user input unit 7007 includes at least one of a touch panel 70071 and another input device 70072. The touch panel 70071 is also referred to as a touchscreen. The touch panel 70071 may include two parts: a touch detection apparatus and a touch controller. The another input device 70072 may include but is not limited to a physical keyboard, a function key (such as a volume control key or an on/off key), a trackball, a mouse, and a joystick. Details are not described herein.

In this embodiment of this application, after receiving downlink data from a network-side device, the radio frequency unit 7001 may transmit the downlink data to the processor 7010 for processing. In addition, the radio frequency unit 7001 may send uplink data to the network-side device. Generally, the radio frequency unit 7001 includes but is not limited to an antenna, an amplifier, a transceiver, a coupler, a low-noise amplifier, a duplexer, and the like.

The memory 7009 may be configured to store a software program or instructions and various types of data. The memory 7009 may mainly include a first storage area for storing a program or instructions and a second storage area for storing data, where the first storage area may store an operating system, an application program or instructions required by at least one function (such as a sound playing function and an image playing function), and the like. In addition, the memory 7009 may include a volatile memory or a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), or a direct rambus random access memory (Direct Rambus RAM, DRRAM). The memory 7009 in this embodiment of this application includes but is not limited to these memories and any other suitable type of memory.

The processor 7010 may include one or more processing units. Optionally, the processor 7010 integrates an application processor and a modem processor. The application processor mainly processes operations related to an operating system, a user interface, an application program, and the like. The modem processor mainly processes a wireless communication signal, such as a baseband processor. It may be understood that, the foregoing modem processor may not be integrated into the processor 7010.

The processor 7010 is configured to determine a number of repetition transmissions for first downlink transmission based on first indication information, where the first indication information is used to indicate at least one number of repetition transmissions, and the first downlink transmission is common PDSCH repetition transmission.

An embodiment of this application provides a terminal. The terminal may determine, based on at least one number of repetition transmissions indicated by first indication information, a number of repetition transmissions for common PDSCH repetition transmission. To be specific, repetition transmission of a common PDSCH is supported based on an indication of a number of repetition transmissions by the first indication information, so that transmission of a downlink channel meets a link budget requirement in a link budget, thereby improving reliability of common PDSCH transmission, and improving a coverage capability of a network.

Optionally, in this embodiment of this application, in a case that the first indication information indicates one number of repetition transmissions, the first indication information is semi-statically configured or dynamically indicated; or

in a case that the first indication information indicates a set of numbers of repetition transmissions, the first indication information is semi-statically configured or specified in a protocol, and the set of numbers of repetition transmissions includes at least two numbers of repetition transmissions.

Optionally, in this embodiment of this application, in the case that the first indication information indicates one number of repetition transmissions, the one number of repetition transmissions is the number of repetition transmissions for the first downlink transmission; or

in the case that the first indication information indicates a set of numbers of repetition transmissions, the number of repetition transmissions for the first downlink transmission is determined by second indication information, where the second indication information is used to indicate one number of repetition transmissions in the set of numbers of repetition transmissions, the one number of repetition transmissions is the number of repetition transmissions for the first downlink transmission, and the second indication information is semi-statically configured or dynamically indicated.

Optionally, in this embodiment of this application, scheduling DCI corresponding to the common PDSCH repetition transmission includes third indication information, and the third indication information is used to enable or disable the number of repetition transmissions that is semi-statically configured or dynamically indicated.

Optionally, in this embodiment of this application, the dynamic indication is indicated by the common PDSCH repetition transmission; or the dynamic indication is indicated by the scheduling DCI corresponding to the common PDSCH repetition transmission.

Optionally, in this embodiment of this application, the dynamic indication is indicated by a scrambling sequence of the common PDSCH repetition transmission;

or

the dynamic indication is indicated by any one of the following:

indicated by an RNTI that scrambles the scheduling DCI;
indicated by a DMRS sequence of a PDCCH on which the scheduling DCI is located; and
indicated by a field in the scheduling DCI.

Optionally, in this embodiment of this application, the dynamic indication is indicated by a scrambling sequence of the common PDSCH repetition transmission;

the common PDSCH repetition transmission is scrambled by a first identifier, and the first identifier corresponds to one repetition factor or one index in the set of numbers of repetition transmissions, to determine the one number of repetition transmissions; or
a DMRS sequence of the common PDSCH repetition transmission or an identifier that generates a sequence initial value corresponds to one repetition factor or one index in the set of numbers of repetition transmissions, to determine the one number of repetition transmissions.

Optionally, in this embodiment of this application, the dynamic indication is indicated by the RNTI that scrambles the scheduling DCI; and the scheduling DCI is scrambled by a first RNTI, and the first RNTI corresponds to one repetition factor or one index in the set of numbers of repetition transmissions, to determine the one number of repetition transmissions.

Optionally, in this embodiment of this application, the scheduling DCI scrambled by the first RNTI includes any one of the following:

a first DCI format with CRC scrambled by a TC-RNTI;
a first DCI format with CRC scrambled by an RA-RNTI; and
a first DCI format with CRC scrambled by an MsgB-RNTI.

Optionally, in this embodiment of this application, the dynamic indication is indicated by the field in the scheduling DCI; and the scheduling DCI indicates, by using a first indication field, one repetition factor or one index in the set of numbers of repetition transmissions, to determine the one number of repetition transmissions, where the first indication field is an existing field or a newly added indication field in the scheduling DCI.

Optionally, in this embodiment of this application, the first indication field is an existing field in the scheduling DCI;

for the scheduling DCI corresponding to a downlink data channel used to carry the Msg2 or the MsgB, the foregoing first indication field includes at least one of the following: a modulation and coding scheme field, a TB scaling field, and a reserved bits field; and
for the scheduling DCI corresponding to a downlink data channel used to carry the Msg4, the foregoing first indication field includes at least one of the following: a modulation and coding scheme field, a new data indicator field, a redundancy version field, a downlink assignment index field, a field of an indicator of timing between a downlink data channel and a HARQ, and a reserved bits field.

Optionally, in this embodiment of this application, the first indication information is specified in a protocol;

the first indication information directly indicates the set of numbers of repetition transmissions specified in the protocol; or
the first indication information is indication information of a number of repetition transmissions in a PDSCH time domain resource allocation table, and the indication information of the number of repetition transmissions is used to indicate the set of numbers of repetition transmissions.

Optionally, in this embodiment of this application, the set of numbers of repetition transmissions indicated by the indication information of the number of repetition transmissions is indicated by modifying a default PDSCH time domain resource allocation table;
or
the set of numbers of repetition transmissions indicated by the indication information of the number of repetition transmissions is indicated by defining a newly added PDSCH time domain resource allocation table that supports repetition transmission.

Optionally, in this embodiment of this application, the processor 7010 is further configured to determine, based on fourth indication information, whether repetition transmission is enabled for the first downlink transmission.

The terminal provided in this embodiment of this application can implement processes implemented by the terminal side in the foregoing method embodiment, and same technical effects can be achieved. To avoid repetition, details are not described herein again.

An embodiment of this application further provides a readable storage medium. The readable storage medium stores a program or instructions. When the program or the instructions are executed by a processor, processes in the foregoing embodiments of the common PDSCH repetition transmission indication method are implemented, and same technical effects can be achieved. To avoid repetition, details are not described herein again.

The processor is a processor in the communication device in the foregoing embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface, the communication interface is coupled to the processor, the processor is configured to run a program or instructions to implement the processes in the foregoing method embodiment, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing method embodiment, and same technical effects can be achieved. To avoid repetition, details are not described herein again.

It should be noted that in this specification, the term "include", "comprise", or any other variant thereof is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more constraints, an element defined by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

**Claims**

1. A common physical downlink shared channel PDSCH repetition transmission indication method, comprising:

   determining, by a terminal, a number of repetition transmissions for first downlink transmission based on first indication information, wherein
   the first indication information is used to indicate at least one number of repetition transmissions, and the first downlink transmission is common PDSCH repetition transmission.

2. The method according to claim 1, wherein in a case that the first indication information indicates one number of repetition transmissions, the first indication information is semi-statically configured or dynamically indicated;
   or
   in a case that the first indication information indicates a set of numbers of repetition transmissions, the first indication information is semi-statically configured or specified in a protocol, and the set of numbers of repetition transmissions comprises at least two numbers of repetition transmissions.

3. The method according to claim 1 or 2, wherein in the case that the first indication information indicates one number of repetition transmissions, the one number of repetition transmissions is the number of repetition transmissions for the first downlink transmission;
   or

in the case that the first indication information indicates a set of numbers of repetition transmissions, the number of repetition transmissions for the first downlink transmission is determined by second indication information, wherein the second indication information is used to indicate one number of repetition transmissions in the set of numbers of repetition transmissions, the one number of repetition transmissions is the number of repetition transmissions for the first downlink transmission, and the second indication information is semi-statically configured or dynamically indicated.

4. The method according to claim 2 or 3, wherein scheduling downlink control information DCI corresponding to the common PDSCH repetition transmission comprises third indication information, and the third indication information is used to enable or disable a number of repetition transmissions that is semi-statically configured or dynamically indicated.

5. The method according to any one of claims 2 to 4, wherein the dynamic indication is indicated by a common PDSCH; or the dynamic indication is indicated by the scheduling DCI corresponding to the common PDSCH repetition transmission.

6. The method according to claim 5, wherein the dynamic indication is indicated by a scrambling sequence of the common PDSCH repetition transmission;
or
the dynamic indication is indicated by any one of the following:

indicated by a radio network temporary identifier RNTI that scrambles the scheduling DCI;
indicated by a demodulation reference signal DMRS sequence of a physical downlink control channel PDCCH on which the scheduling DCI is located; and
indicated by a field in the scheduling DCI.

7. The method according to claim 6, wherein the dynamic indication is indicated by the scrambling sequence of the common PDSCH repetition transmission;

the common PDSCH repetition transmission is scrambled by a first identifier, and the first identifier corresponds to one repetition factor or one index in the set of numbers of repetition transmissions, to determine the one number of repetition transmissions; or
a DMRS sequence of the common PDSCH repetition transmission or an identifier that generates a sequence initial value corresponds to one repetition factor or one index in the set of numbers of repetition transmissions, to determine the one number of repetition transmissions.

8. The method according to claim 6, wherein the dynamic indication is indicated by the RNTI that scrambles the scheduling DCI; and
the scheduling DCI is scrambled by a first RNTI, and the first RNTI corresponds to one repetition factor or one index in the set of numbers of repetition transmissions, to determine the one number of repetition transmissions.

9. The method according to claim 8, wherein the scheduling DCI scrambled by the first RNTI comprises any one of the following:

a first DCI format with cyclic redundancy check CRC scrambled by a temporary cell TC-RNTI;
a first DCI format with CRC scrambled by a random access RA-RNTI; and
a first DCI format with CRC scrambled by an MsgB-RNTI.

10. The method according to claim 6, wherein the dynamic indication is indicated by the field in the scheduling DCI; and
the scheduling DCI indicates, by using a first indication field, one repetition factor or one index in the set of numbers of repetition transmissions, to determine the one number of repetition transmissions, wherein the first indication field is an existing field or a newly added indication field in the scheduling DCI.

11. The method according to claim 1 or 2, wherein the first indication information is indication information of a number of repetition transmissions in a PDSCH time domain resource allocation table, and the indication information of the number of repetition transmissions is used to indicate the set of numbers of repetition transmissions;

the set of numbers of repetition transmissions indicated by the indication information of the number of repetition transmissions is indicated by modifying a default PDSCH time domain resource allocation table; or

the set of numbers of repetition transmissions indicated by the indication information of the number of repetition transmissions is indicated by defining a newly added PDSCH time domain resource allocation table that supports repetition transmission.

12. The method according to claim 1, wherein the method further comprises:
determining, by the terminal based on fourth indication information, whether repetition transmission is enabled for the first downlink transmission.

13. A common physical downlink shared channel PDSCH repetition transmission indication apparatus, comprising a determining module, wherein

the determining module is configured to determine a number of repetition transmissions for first downlink transmission based on first indication information, wherein

the first indication information is used to indicate at least one number of repetition transmissions, and the first downlink transmission is common PDSCH repetition transmission.

14. A terminal, comprising a processor and a memory, wherein the memory stores a program or instructions executable on the processor, and when the program or the instructions are executed by the processor, the steps of the common physical downlink shared channel PDSCH repetition transmission indication method according to any one of claims 1 to 12 are implemented.

15. A readable storage medium, wherein the readable storage medium stores a program or instructions, and when the program or the instructions are executed by a processor, the steps of the common physical downlink shared channel PDSCH repetition transmission indication method according to any one of claims 1 to 12 are implemented.

16. A computer program product, wherein the computer program product is stored in a storage medium, and the computer program product is executed by at least one processor to implement the steps of the common physical downlink shared channel PDSCH repetition transmission indication method according to any one of claims 1 to 12.

17. A chip, wherein the chip comprises a processor and a communication interface, the communication interface is coupled to the processor, and the processor is configured to run a program or instructions to implement the steps of the common physical downlink shared channel PDSCH repetition transmission indication method according to any one of claims 1 to 12.

18. A terminal, wherein the terminal is configured to perform the common physical downlink shared channel PDSCH repetition transmission indication method according to any one of claims 1 to 12.

FIG. 1

| | |
|---|---|
| A terminal obtains first indication information | 201 |

| | |
|---|---|
| The terminal determines a number of repetition transmissions for first downlink transmission based on the first indication information | 202 |

FIG. 2

| | |
|---|---|
| A terminal obtains first indication information | 201 |

| | |
|---|---|
| The terminal determines a number of repetition transmissions for first downlink transmission based on the first indication information | 202 |

| | |
|---|---|
| The terminal determines, based on fourth indication information, whether repetition transmission is enabled for the first downlink transmission | 301 |

FIG. 3

A terminal obtains fourth indication information — 401

The terminal determines, based on the fourth indication information, whether repetition transmission is enabled for the first downlink transmission — 402

FIG. 4

Common PDSCH repetition transmission indication apparatus — 40

Determining module — 41

FIG. 5

5000

Communication device

5001 — Processor ⟺ Memory — 5002

FIG. 6

7000

| | | | |
|---|---|---|---|
| 7001 — Radio frequency unit | | | Network module — 7002 |

7010

Memory
7009 — | Application program |
| Operating system |

7008 — Interface unit

Processor

Audio output unit — 7003

7004
Input unit
| Graphics processing unit | — 70041 |
| Microphone | — 70042 |

7007
User input unit
70071 — | Touch panel |
70072 — | Another input device |

7006
Display unit — 70061
| Display panel |

Sensor — 7005

FIG. 7

## INTERNATIONAL SEARCH REPORT

| International application No. |
|---|
| **PCT/CN2024/103614** |

| **A.** | **CLASSIFICATION OF SUBJECT MATTER** |
|---|---|

H04L5/00(2006.01)i

According to International Patent Classification (IPC) or to both national classification and IPC

| **B.** | **FIELDS SEARCHED** |
|---|---|

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

CNTXT, ENTXTC, CNKI, ENTXT, VEN, DWPI, 3GPP: 重复, 传输, 次数, 集合, 动态, 指示, 加扰, 序列, 半静态, DCI, DMRS, number, PDSCH, repetition, RNTI, set?

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | WO 2022082786 A1 (HUAWEI TECHNOLOGIES CO., LTD.) 28 April 2022 (2022-04-28) description, paragraphs 192-260, and claims 1-48 | 1-18 |
| X | CN 114828236 A (SPREADTRUM SEMICONDUCTOR (NANJING) CO., LTD.) 29 July 2022 (2022-07-29) description, paragraphs 62-70 | 1-18 |
| X | WO 2022161483 A1 (SPREADTRUM SEMICONDUCTOR (NANJING) CO., LTD.) 04 August 2022 (2022-08-04) description, paragraphs 63-86 | 1-18 |
| X | NOKIA NETWORKS. "R1-156640, PDSCH PUSCH Repetition Level Indication" *3GPP tsg_ran\WG1_RL1*, 06 November 2015 (2015-11-06), text, section 2 | 1-18 |
| X | NOKIA NETWORKS. "R1-153832, PDSCH/PUSCH Repetition Level Indication" *3GPP tsg_ran\WG1_RL1*, 14 August 2015 (2015-08-14), text, section 2 | 1-18 |

✓ Further documents are listed in the continuation of Box C.  ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 October 2024** | **18 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/103614**

### C. DOCUMENTS CONSIDERED TO BE RELEVANT

| Category* | Citation of document, with indication, where appropriate, of the relevant passages | Relevant to claim No. |
|---|---|---|
| A | CN 111092695 A (ZTE CORP.) 01 May 2020 (2020-05-01)<br>entire document | 1-18 |
| A | WO 2021062209 A1 (QUALCOMM INC.) 01 April 2021 (2021-04-01)<br>entire document | 1-18 |

Form PCT/ISA/210 (second sheet) (July 2022)

## INTERNATIONAL SEARCH REPORT
### Information on patent family members

International application No.

**PCT/CN2024/103614**

| Patent document cited in search report | | | Publication date (day/month/year) | Patent family member(s) | | | Publication date (day/month/year) |
|---|---|---|---|---|---|---|---|
| WO | 2022082786 | A1 | 28 April 2022 | US | 2023262724 | A1 | 17 August 2023 |
| | | | | EP | 4231713 | A1 | 23 August 2023 |
| | | | | EP | 4231713 | A4 | 15 November 2023 |
| | | | | JP | 2023546606 | A | 06 November 2023 |
| CN | 114828236 | A | 29 July 2022 | None | | | |
| WO | 2022161483 | A1 | 04 August 2022 | US | 2024121772 | A1 | 11 April 2024 |
| CN | 111092695 | A | 01 May 2020 | TW | 202118340 | A | 01 May 2021 |
| | | | | WO | 2021088656 | A1 | 14 May 2021 |
| WO | 2021062209 | A1 | 01 April 2021 | None | | | |

Form PCT/ISA/210 (patent family annex) (July 2022)

**EP 4 746 330 A1**

## REFERENCES CITED IN THE DESCRIPTION

**Patent documents cited in the description**

- CN 202310843379